(19) Europäisches Patentamt
European Patent Office
Office européen des brevets

(11) **EP 1 332 586 B1**

(12) **EUROPÄISCHE PATENTSCHRIFT**

(45) Veröffentlichungstag und Bekanntmachung des Hinweises auf die Patenterteilung:
**15.07.2009 Patentblatt 2009/29**

(51) Int Cl.:
*H04L 12/28* (2006.01)     *H04L 29/06* (2006.01)
*H04L 1/00* (2006.01)

(21) Anmeldenummer: **01964925.0**

(22) Anmeldetag: **23.08.2001**

(86) Internationale Anmeldenummer:
**PCT/DE2001/003238**

(87) Internationale Veröffentlichungsnummer:
**WO 2002/039612 (16.05.2002 Gazette 2002/20)**

(54) **KANALSTRUKTUR EINES FUNKKOMMUNIKATIONSSYSTEMS**

CHANNEL STRUCTURE OF A RADIO COMMUNICATION SYSTEM

STRUCTURE DE CANAUX D'UN SYSTEME DE COMMUNICATION RADIO

(84) Benannte Vertragsstaaten:
**AT BE CH CY DE DK ES FI FR GB GR IE IT LI LU MC NL PT SE TR**
Benannte Erstreckungsstaaten:
**LT LV**

(30) Priorität: **07.11.2000 DE 10056085**

(43) Veröffentlichungstag der Anmeldung:
**06.08.2003 Patentblatt 2003/32**

(73) Patentinhaber: **IQ Wireless GmbH**
**12489 Berlin (DE)**

(72) Erfinder:
• **JÄCKEL, Klaus**
**12529 Schönefeld (DE)**

• **JOCK, Andreas**
**15831 Mahlow (DE)**
• **REDDNER, Hardy**
**13591 Berlin (DE)**
• **SCHIFFEL, Reinhard**
**14621 Schönwalde (DE)**
• **STADLER, Bruno**
**12487 Berlin (DE)**
• **VOGEL, Holger**
**13156 Berlin (DE)**

(56) Entgegenhaltungen:
**WO-A-98/10566     WO-A-99/62205**

**Beschreibung**

Die vorliegende Erfindung betrifft das Gebiet der Einrichtungen und Verfahren, die stationären Teilnehmern den drahtlosen Zugang zum Internet und zum PSTN ermöglichen, speziell der Art, daß sowohl der Zugang zum Internet als auch der Zugang zum PSTN direkte Zugänge sind, und ein Teilnehmer beide Zugänge simultan und unabhängig voneinander nutzen kann. Im Detail betrifft die Erfindung die Verfahren und Einrichtungen zur Realisierung des Airinterface, des Kanalaufbaus und der Dienstevermittlung im Airinterface derartiger Funksysteme sowie der aufwandsgünstigen Lösung des Problems.

Drahtlose lokale Zugangsnetze zum PSTN haben sich im letzten Jahrzehnt immer mehr durchgesetzt und sind inzwischen landläufig unter dem Begriff WLL (Wireless Local Loop) eingeführt. Diese Zugangsnetze sind unter dem Aspekt entwickelt, daß sie dem Teilnehmer die telekommunikative Grundversorgung als POTS (Plain Old Telephone Service) bieten. Sie unterscheiden sich insofern von den Mobilfunknetzen, die das Merkmal der Mobilität zusätzlich zu einer anderweitig bereits vorhandenen Grundversorgung realisieren, ohne diese ersetzen zu wollen oder ersetzen zu können. Ein daraus resultierendes unterscheidendes Merkmal ist, daß bei WLL die Teilnehmerstationen keine Endgeräte darstellen, sondern Schnittstellen für den Anschluß von Endgeräten nach Wahl des Teilnehmers aufweisen, während bei Mobilfunknetzen die Teilnehmerstationen Endgerätefunktion besitzen.

Ein typischer Vertreter der ersten Generation von WLL sind die in DE 4240249 beschriebenen Einrichtungen und Verfahren. Inzwischen sind vielfältige Weiterentwicklungen erfolgt, die vor allem den Übergang von der analogen zur digitalen Übertragung im Airinterface, die Steigerung der Datenraten für Modem- und Faxübertragungen und die Erweiterung des Diensteangebotes beinhalten.

Für heutige Bedingungen sind diese Einrichtungen inclusive der erfolgten Weiterentwicklungen nicht ausreichend. Der Zugang zum Internet ist inzwischen ein unverzichtbares Telekommunikationsangebot. Die existierenden WLL erlauben zwar den Zugang zum Internet mittels Modem über das PSTN, jedoch ist dies auf Grund der geringen Bandbreiten / Datenraten, die der Sprachübertragung im Airinterface von WLL der bisherigen Art zur Verfügung gestellt werden, uneffektiv. Zudem ist der Zugang zum PSTN über WLL meist die einzige Kommunikationsverbindung des Teilnehmers und die Belegung durch einen Internetzugriff lästig und behindernd und der Akzeptanz von WLL abträglich.

Entsprechend sind vielerorts Bestrebungen im Gange, die Mängel der bestehenden Einrichtungen durch neue Lösungsansätze zu überwinden. Beispiele sind in den nachfolgenden Ausführungen beschrieben.

In der Veröffentlichung WO 99/55030 werden ein Verfahren und eine Einrichtung beschrieben, die es mobilen Teilnehmern ermöglichen, über Funk auf das Internet zuzugreifen. Das Airinterface beruht auf den im Anspruch 1 von WO 99/55030 beschriebenen Verfahren der Übertragung mittels OFDM (Orthogonal Frequency Division Multiplex), einer zwei- oder mehrwertigen Differenz-Phasenmodulation, dem Empfang unter Verwendung von Antennenarrays (Smart Antennas) und phasenbewerteter Addition der Signale aller Einzelantennen jeweils für jeden Subträger und der Demodulation der so gewonnenen Empfangssignale durch Bestimmung der Phasendifferenz zwischen jeweils zwei benachbarten Subträgern für jeweils alle Subträgerpaare.

Ein bestimmendes Merkmal der in WO 99/55030 beschriebenen Verfahren und Einrichtung ist, daß ausschließlich paketorientierte Dienste übertragen werden. Dies hat zur Folge, daß Sprache systemintern als VoIP (Voice over IP) übertragen wird. Der Teilnehmer muß demzufolge eine VoIP-taugliche Einrichtung an die Teilnehmerstation anschalten, um Sprachverbindungen herstellen zu können. Sprachverbindungen zu anderen VoIP-tauglichen Einrichtungen werden über das Internet geroutet und Verbindungen in das PSTN (Public Switched Telephone Network) über Telephone Gateways realisiert. In der Veröffentlichung US 5910946 (GB 2321158; JP 10224853) werden ein Verfahren und eine Einrichtung beschrieben, die es mobilen Teilnehmern ermöglichen, über Funk sowohl Sprache als auch Daten über das Internet als auch über das PSTN zu übertragen. Die Systemarchitektur beinhaltet, daß eine oder mehrere Basisstationen über eine E1- oder T1-Verbindung an ein Central Office angeschaltet sind, welches sowohl mit dem PSTN als auch mit dem Internet verbunden ist. Kommende wie auch gehende Verbindungen von/zu Teilnehmern im PSTN werden vom Central Office bis in die Basisstation als 64 kbps PCM-Signal in einem Timeslot der E1- oder T1-Verbindung übertragen. Kommende wie auch gehende Verbindungen von/zu Internetteilnehmern, die Voice over IP bedienen, werden vom Central Office bis in die Basisstation als Internetverbindung ebenfalls in Timeslots der E1- oder T1-Verbindung übertragen. Von der Basisstation werden für beide Verbindungsarten die Sprachsignale nach entsprechender Umsetzung als digitales nach QSELP komprimiertes Sprachsignal mit 8 kbps oder 13,3 kbps im Airinterface in beiden Richtungen übertragen. Es gibt in der Veröffentlichung keine explizite Aussagen über die Teilnehmerstation. Es ist wahrscheinlich, daß diese als mobile Einrichtung gleichzeitig Endgerät ist. Das Verfahren begrenzt die Möglichkeit der Datenübertragung auf die mit dem oben genannten Verfahren vorgegebenen Datenraten, was für den mobilen Teilnehmer einen akzeptablen Wert darstellen kann.

In den korrespondierenden Veröffentlichungen WO 99/62268 und WO 99/61984 werden ein Verfahren und eine Einrichtung beschrieben, die es mobilen Teilnehmern ermöglichen, über Funk auf das Internet zuzugreifen. Das Verfahren hat vor allem die Zielstellung, eine schmalbandige Übertragung im Airinterface zu realisieren, wie sie dem Stand der Technik entsprechend von mobilen Einrichtungen meist nur unterstützt wird.

Hierzu wird erstens im Airinterface der Informationsaustausch zwischen Teilnehmerstation und Basisstation nicht als Internetverbindung mit TCP/IP durchgeführt. Der Datenaustausch zwischen dem "Wireless Client" der Teilnehmerstation und einem "Wireless Access Point" in der Basisstation erfolgt mit weniger datenintensiven Verfahren und Protokollen. In der Basisstation werden die Informationen vom "Wireless Access Point" über einen "Wireless Network Tunneler" zu einem Proxy Server (und umgekehrt) übertragen. Erst der Proxy Server stellt eine reguläre Verbindung zum Internet mit TCP/IP her.

Hierzu wird zweitens mit einer verteilten Web-Site gearbeitet, indem zum Teilnehmer eine Web-Site nur teilweise übertragen wird. Die übertragene Information ist dahingehend eingeschränkt, daß nur Auswahlelemente zum Teilnehmer übertragen werden, ausreichend dafür, daß der Teilnehmer weitere Anforderungen definieren und über das Airinterface an die Einrichtungen der Basisstation schicken kann, die die anderen Teile der Web-Site verwalten. Diese Einrichtungen schicken an den Teilnehmer die speziell angeforderten Teile der Web-Site oder schicken eine daraus resultierende Anforderung in das Internet. Eine Antwort aus dem Internet wird dann in der gleichen Form mit dem Teilnehmer abgearbeitet.

Das Verfahren der Veröffentlichungen WO 99/62268 und WO 99/61984 kann dem Teilnehmer damit einen inhaltlich nicht eingeschränkten Zugriff zum Internet bieten, jedoch ist der Zugriff in der Handhabung aufwendig und langsam. Für und von mobilen Teilnehmern werden solche einschränkenden Bedingungen jedoch meist akzeptiert.

In der Veröffentlichung EP 0927482 (WO 99/01969; AU 8181498) wird ein Verfahren beschrieben, welches es Teilnehmern ermöglicht, über Funk auf das Internet zuzugreifen. Hierfür sollen die bestehenden Mobilfunknetze genutzt werden, indem ein Computer über ein "cellular telephone modern" mit der mobilen Teilnehmerstation verbunden wird. Das Konzept kann, bei Anwendung entsprechender Computer, als bedingt mobil oder besser halbstationär bezeichnet werden. Die Veröffentlichung EP 0927482 befaßt sich nicht mit dem Airinterface, welches als vom Mobilfunknetz geboten und existent betrachtet wird, als vielmehr mit den Problemen des Routing, Tunneling und der Authentifizierung in den verschiedenen Netzen. Ein besonderer Aspekt der dargestellten Architektur ist, daß die Verbindungen aus dem Mobilnetz über ein "Communication Chassis" zu einem bestimmten Internet-Serviceprovider (ISP) geroutet werden. Mobilität vorausgesetzt können somit Zugriffsversuche von Teilnehmern erfolgen, die nicht Kunden dieses bestimmten Serviceproviders sind. Es wird für diesen Fall eine Lösung dargestellt, wie mobilen Teilnehmern der Zugang zum Internet und anderen Netzen trotzdem ermöglicht wird.

Das Verfahren in der Veröffentlichung EP 0927482 ist damit bei der Datenübertragung begrenzt auf die durch die Mobilfunknetze vorgegebenen Datenraten, was für den mobilen Teilnehmer einen akzeptablen Wert darstellen kann.

In der Veröffentlichung US 5905719 (WO 98/12833) werden ein Verfahren und eine Einrichtung beschrieben, die es stationären Teilnehmern ermöglichen, über Funk auf das Internet zuzugreifen. Im spezifischen Airinterface wird als Zugriffsverfahren TDM/TDMA und als Duplexverfahren TDD benutzt. Das Duplexverfahren ist unsymmetrisch ausgestaltet, indem für das Downlink eine vierfach höhere Slotdauer /Datenkapazität als im Uplink bereitgestellt wird. Dies soll dem Fakt Rechnung tragen, daß die von den Teilnehmern verursachte richtungsabhängige Datenlast etwa diesem Verhältnis entsprechen soll. Für die Sprachübertragung auf der Basis von Voice over IP mit 6 kbps oder 16 kbps können schmalbandige Kanäle zugewiesen werden. Hochratige Datenübertragungen bis 248 kbps im Downlink werden durch Mehrkanalzuweisung (Kanalbündelung) realisiert. Datenübertragung und Voice over IP können in diesem Falle simultan erfolgen.

In der Veröffentlichung GB 2313981 wird eine Einrichtung beschrieben, die es stationären Teilnehmern ermöglicht, über Funk auf das Internet zuzugreifen. Die Einrichtung beinhaltet zum ersten, daß für das Uplink der Internetverbindung ein bestehendes öffentliches Funknetz, beispielsweise ein GSM-Netz genutzt wird. Der Teilnehmer wählt zum Verbindungsaufbau den Einwahlpunkt seines Internet Serviceproviders an. Die Verbindungsanmeldung und alle weiteren Daten im Uplink werden über dieses Funknetz und über das PSTN zum Einwahlpunkt dieses Internet Serviceproviders geroutet. Die Einrichtung beinhaltet zum zweiten, daß für das Downlink der Internetverbindung ein spezielles breitbandiges Funksystem genutzt wird. Hierzu werden am Einwahlpunkt des Internet Serviceproviders die im Uplink zu übertragenden Daten ausgekoppelt und über eine hochratige Datenverbindung zum Sender des speziellen Funksystems übertragen und von diesem über das Airinterface zum Empfänger am Standort des Teilnehmers übertragen. Der Lösung liegt die Behauptung zu Grunde, daß der Datenverkehr im Uplink im allgemeinen gering im Vergleich zum Datenverkehr im Downlink ist und für den geringen Datenverkehr im Uplink ein Mobilfunkkanal ausreichend sein sollte. Bestandteil der beschriebenen Einrichtung sind die Splitter/Combiner, die den Datenverkehr am Teilnehmerinterface und am Einwahlpunkt des Internet Serviceproviders trennen beziehungsweise zusammenführen und die unterschiedlichen Kanäle für die beiden Übertragungsrichtungen bedienen.

Es zeigt sich, daß der drahtlose Internetzugang bei den bisher existenten oder in Vorbereitung befindlichen Lösungen vorwiegend auf den mobilen Nutzer orientiert ist und meist schmalbandige Übertragungsverfahren, teilweise auch auf Basis der öffentlichen Mobilfunknetze, realisiert werden. Diese Orientierung führt zu Einschränkungen, die vorwiegend in der Datenübertragungsgeschwindigkeit begründet sind. Verfahren, die mit speziellen breitbandigeren Übertragungsverfahren im Airinterface arbeiten, gehen meist von der Annahme aus, daß Internetnutzer in der Regel im Uplink wesentlich geringere Datenmengen übertragen als im Downlink, und gestalten entsprechend das Verhältnis der Übertragungskapazität im Uplink und Downlink. Diese Annahme hat eine recht hohe Wahrscheinlichkeit für eine Internetnutzung, die mit dem Begriff Surfen beschrieben ist, oder den mobilen Teilnehmer, der vorwiegend Auskunftsdienste und ähnliches nutzt.

Des weiteren bieten die vorgestellten Einrichtungen mit drahtlosem Internetzugang Sprachverbindungen ausschließlich auf der Basis von Voice over IP. Insbesondere an der Teilnehmerstation ist die Realisierung von Voice over IP vergleichsweise einfacher als die eines Zugangs zum PSTN (Public Switched Telephone Network). Voice over IP hat jedoch entscheidende Nachteile. Dies sind vor allem die nicht garantierte Verbindung, hohe Verzögerungszeiten durch die Paketierung und durch Übergänge an Gateways, zusätzlich zu den durch die immer benutzten Kompressionsverfahren bedingten Verzögerungszeiten, und das Fehlen von Dienstmerkmalen, wie sie beispielsweise in der BRD als Universaldienste in der TKDLV (Telekommunikations-Universaldienstleistungsverordnung) benannt sind und Mindestangebote für Telekommunikationsdienstleistungen darstellen.

Für solche stationären Teilnehmer, für welche der drahtlose Anschluß die Grundversorgung darstellt, sind die oben genannten Einschränkungen nicht akzeptierbar, auch nicht für deutlich niedrige Preise. In diesem Anwendungsbereich muß mit gewerblicher Nutzung gerechnet werden, die bezüglich der Internetnutzung mehr zu gleichem Datenumfang im Uplink und Downlink tendiert. Des weiteren sind die durch Voice over IP sich ergebenden Einschränkungen nicht akzeptabel und das Fehlen des direkten POTS- oder ISDN-Zugangs mit allen Dienstmerkmalen ein entscheidender Mangel.

Funkkommunikationssysteme, die den neuen Anforderungen gerecht werden, erfordern vor allem, dem Funkteilnehmer den Zugang zu POTS und Internet simultan und unabhängig voneinander zu ermöglichen und für beide Dienste Datenraten und Dienstmerkmale entsprechend den Eigenschaften der Festnetze zu bieten.

In [1] wird diesbezüglich das Konzept eines DECT-basierten WLL-Systems beschrieben, welches sich zur Aufgabe stellt, ein Zugangsnetzwerk zum Internet und ein Zugangsnetzwerk zum PSTN in einem System zu vereinigen. DECT (Digital European Cordless Telephone) ist ein durch das ETSI normiertes System (ETS 300-175) der schnurlosen Telefonie. Es ist bestimmungsgemäß für geringe Reichweiten bis 300 m und Sprachübertragung vorgesehen. DECT hat bereits in der Standardausführung eine geringe Frequenzeffektivität, welche mit 0,226 Bit/s*Hz (Duplexbetrieb) angegeben werden kann. In dieser Ausführung beträgt die laufzeitbedingte Reichweite 5 km. In dem besagten Konzept wird eine Reichweite von 15 km vorgegeben, ohne zu benennen, daß in diesem Falle im Kanalschema nur jeder zweite Slot nutzbar ist, um hinreichende Abstände für den Laufzeitausgleich zu schaffen. Die Frequenzeffektivität verringert sich in diesem Falle auf 0,113 Bit/s*Hz.

Hinzu kommt, daß DECT weder mit einem Fehlerschutzverfahren wie FEC oder anderem noch mit einem Equalizer zur Kompensation von Störungen durch Mehrwegeausbreitung ausgestattet ist. Beide Fakten im Verbund haben zur Folge, daß DECT nur eine BER von 10-3 erreicht, was für die Übertragung von Sprache mittels 32 kbps ADPCM ausreicht, für die Datenübertragung jedoch unzureichend ist. Insbesondere Störungen durch Mehrwegeausbreitung und dadurch entstehende Intersymbol-Interferenzen sind bei Übertragungsstrecken bis 15 km nicht mehr vernachlässigbar. Der Grund ist darin zu sehen, daß bereits eine Umweglänge von 500 m ein Produkt von $\Pi_{DS}$=Symbolrate*Umweglaufzeit = 1,5 ergibt, siehe hierzu auch untenstehende Ausführungen.

Im praktischen Einsatz sind unter anderem aus den genannten Gründen bisher alle Versuche, DECT für WLL-Anwendungen mit Reichweiten größer 1 km und für Datenübertragung zu nutzen, problembehaftet gewesen. Diese Nachteile sind nur durch speziell problemangepaßte wie die erfindungsgemäße Lösung zu überwinden. Die nachfolgend beschriebene Erfindung berücksichtigt daher den Einsatz eines FEC zur Fehlersicherung und den Einsatz von Equalizern und Preequalizern, wie unten beschrieben.

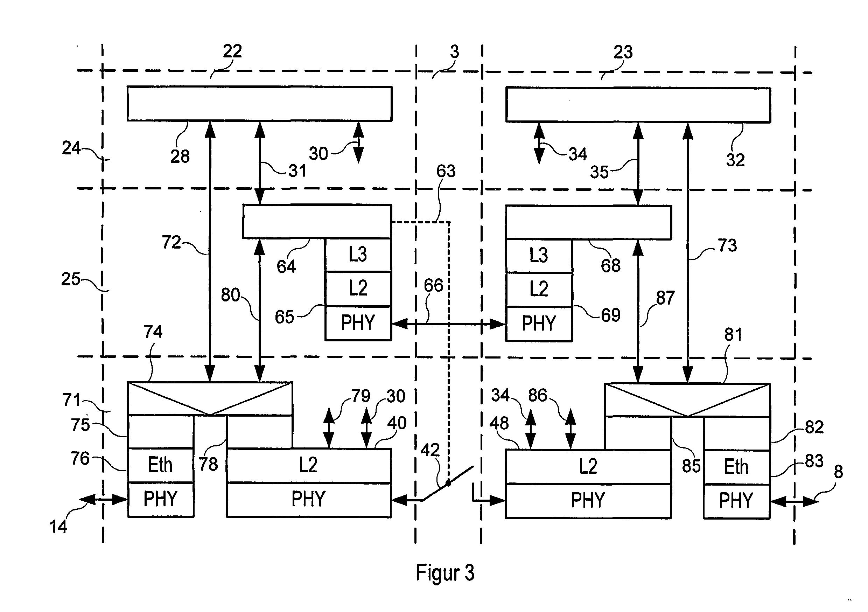

Das in [1] vorgestellte Konzept definiert ein Modell des Internet-Verkehrs mit drei Layern, dem Session Layer, dem Page Layer und dem Packet Layer (siehe [1], 3.5 und 3.6 und Figure 3). Dieses Denkmodell geht davon aus, daß während einer Internetsitzung eine Vielzahl von Seiten übertragen werden und zwischen den Übertragungen der Seiten größere Pausen existieren und daß zur Übertragung einer Seite eine Vielzahl von Paketen erforderlich ist und zwischen den Übertragungen der Pakete ebenfalls Pausen, wenn auch kürzere, auftreten. Entsprechend Konzept erfolgt die Übertragung des Internetverkehrs auf dem Packet Layer, das heißt, daß für jedes Paket eine neue physikalische Verbindung zwischen einer Basisstation und der Teilnehmerstation aufgebaut wird. Dies erfordert ein schnelles Zugriffsverfahren, welches von DECT prinzipiell geboten wird.

Demgegenüber erfolgt, Bezug nehmend auf das obige Denkmodell, bei der erfindungsgemäßen Lösung wie unten beschrieben die Übertragung des Internetverkehrs auf dem Page Layer. Das heißt, daß die kürzeren Pausen zwischen den Paketen überbrückt werden und für diese Zeit die physikalische Verbindung im Airinterface bestehen bleibt und gegebenenfalls nur in ihrer Kapazität reduziert wird, und daß erst für die größeren Pausen zwischen den Pages ein Abbau der physikalischen Verbindung erfolgt.

Das in [1] vorgestellte Konzept geht weiter davon aus, daß lediglich für die Übertragung des Internet-Verkehrs eine Layer 2 Sicherung erfolgt (siehe [1], Seite 8). Da keine Subsegmentierung der IP-Pakete vorgesehen ist, kann die Layer 2 Sicherung nur auf Paketebene wirksam sein. Dies hat erhebliche Nachteile, da bei Paketlängen bis 1500 Byte entsprechend 12.000 Bit bei der oben genannten Fehlerrate die Wahrscheinlichkeit für fehlerhaft übertragene Pakete sehr hoch ist und häufige Wiederholungen der Übertragung von Paketen zu erwarten sind.

Demgegenüber erfolgt bei der erfindungsgemäßen Lösung wie unten beschrieben eine Subsegmentierung der IP-Pakete für die Übertragung im Airinterface, auf welche die Layer 2 Sicherung aufsetzt. Bei einer im Durchschnitt um eine Größenordnung geringeren Länge der Subpakte und einer um drei Größenordnungen kleineren Fehlerrate der erfindungsgemäßen Lösung ist zum ersten die Wahrscheinlichkeit für fehlerhaft übertragene Pakete sehr gering und zum zweiten die Wiederholung der Übertragung von Subpaketen bezüglich der Effektivität der Übertragung und der resultierenden Datenrate von geringerem Einfluß.

Des Weiteren umfaßt bei der erfindungsgemäßen Lösung wie unten beschrieben die Layer 2 Sicherung die IP-Daten, OA&M-Daten und Signalisierungen von POTS-Verbindungen in einem gemeinsamen Layer 2, wodurch auch für die anderen genannten Diensttypen eine erhöhte Übertragungssicherheit erzielt wird. Die Überwindung der verschiedenen genannten Nachteile erfordert spezielle Multiplex- und Zugriffsverfahren, welche die erforderliche Breitbandigkeit und Flexibilität gewährleisten. Ein fortgeschrittenes Verfahren ist CDM/CDMA (Code Division Multiplex / Code Division Multiple Access). Code-Multiplex- beziehungsweise -zugriff zeichnet sich vorteilhaft dadurch aus, daß:

- die Nutzer im gleichen Frequenzband arbeiten können,
- eine relativ hohe Störleistung im Band toleriert wird,
- unter bestimmten Bedingungen auch benachbarte Funkzellen die gleiche Frequenz wiederverwenden können.

Im Code-Multiplex bei Überlagerung von mehreren Maximalfolgen im gleichen Frequenzband muß von den Spreizsequenzen gefordert werden, daß sie untereinander gut trennbar sind. Häufig werden dafür sogenannte GOLD-Folgen verwendet, von welchen mehrere Familien bekannt sind und die innerhalb einer Familie niedrige KKF-Werte untereinander für beliebige Codephasen aufweisen. Jedoch sind diese KKF-Werte nicht Null, so daß ein Übersprechen bei der Entspreizung zwischen den einzelnen Folgen auftritt, was den Multiplexbetrieb auf vergleichsweise wenige der besagten Folgen beschränkt.

Für Code-Multiplex mit der nachrichtentheoretisch maximal möglichen Übertragungskapazität muß man orthogonale Signalräume nutzen. Walsh-Hadamard-Sequenzen sind zum Beispiel derartige orthogonale Codesequenzen. Die Orthogonalität beschränkt sich aber auf eine Vorzugs-Codephase, so daß zur Ausnutzung der Orthogonalität alle Sequenzen codephasensynchron in einem Empfänger eintreffen und eine synchrone Demodulation vorgenommen werden müssen.

Reine TDMA-Verfahren haben generell das Problem, daß auf Grund der zeitsequentiellen Übertragung die Symbolrate hohe Werte annimmt und das Produkt $\Pi_{DS}$=Symbolrate*Umweglaufzeit Werte » 1 annimmt, das heißt, daß die Umwegsignale eines Symbols $A_n$ als Intersymbol Interferenzen der Signale $A_{n+k}$, k=1 ... $\Pi_{DS}$ in Erscheinung treten. TDMA-Verfahren weisen damit bezüglich Mehrwegeausbreitungen eine hohe Empfindlichkeit auf.

CDMA-Verfahren besitzen diesbezüglich günstigere Voraussetzungen als TDMA-Verfahren, da bei gleicher zu übertragender Datenmenge CDMA-Verfahren diese Datenmenge in S überlagerten Kanälen übertragen, wobei S die Anzahl der verwendeten Codesequenzen ist. Damit reduziert sich die Symbolrate gegenüber TDMA-Verfahren um diesen Faktor S. So ergibt sich in einem Beispiel bei S=32 und einer Symbolrate von 120 kSymbolen/s und einer angenommenen maximalen Umweglänge von 2,5 km, was einer Umweglaufzeit von 8,3 μs entspricht, ein Produkt $\Pi_{DS}$=Symbolrate*Umweglaufzeit= 1. Für ein TDMA-Verfahren gleicher Kapazität würde sichn $\Pi_{DS}$=32 ergeben.

Des weiteren müssen bei TDMA im Multiuserbetrieb die Schutzzeiten für den Laufzeitausgleich zeitsequentiell in die Übertragung in der Richtung von den Teilnehmerstationen zur Basisstation eingefügt werden, was die Effektivität der Datenübertragung verringert.

Diesbezüglich ist eine Verbindung von CDMA mit einem eingebetteten TDMA vorteilhaft, da sich die Anzahl der zeitsequentiell in die Übertragung einzufügenden Schutzzeiten für den Laufzeitausgleich entsprechend der Anzahl der Codekanäle S um diesen Faktor verringert. Gleichzeitig wird die Anzahl der parallel verfügbaren Kanäle, die bei reinem CDMA auf S begrenzt ist, erhöht.

Der vorliegenden Erfindung liegt die Aufgabe zu Grunde, die Nachteile der vorgenannten Einrichtungen und Verfahren zu überwinden. Die Aufgabe wird durch die Einrichtungen und Verfahren entsprechend den Merkmalen des Anspruchs 1 gelöst.

Das Funkkommunikationssystem umfaßt zur Realisierung dieser Aufgabe eine Basisstation, eine Vielzahl von Teilnehmerstationen, eine Ortsvermittlungseinrichtung des PSTN und das PSTN, optionale Anschalteinrichtungen, einen ersten Router, einen Zugangspunkt eines ISP (Internet Service Provider) und das Internet, eine lokale OA&M-Einrichtung, ein OA&M-Center und einen zweiten Router/Proxyserver.

Die Basisstation ist

- über ein Airinterface mit der Vielzahl der Teilnehmerstationen verbunden,
- über eine oder mehrere E1- oder T1-PCM Verbindungen, ggf. unter Zwischenschaltung der optionalen Anschalteinrichtungen, mit der Ortsvermittlungseinrichtung des PSTN und

- über ein Ethernet mit dem Router 1 und der lokalen OA&M-Einrichtung verbunden.

Der erste Router ist über eine Datenverbindung mit dem Zugangspunkt des ISP verbunden.

Das OA&M-Center ist über den zweiten Router/Proxyserver mit dem Internet verbunden, wobei diese Verbindung ebenfalls über einen ISP, der mit dem erstgenannten nicht identisch sein muß, erfolgt. Das OA&M-Center ist gegebenenfalls für eine Mehrzahl derartiger erfindungsgemäßer Einrichtungen vorgehalten.

Die Teilnehmerstationen besitzen jeweils

- ein PSTN-Teilnehmerinterface, welches für POTS (Plain Old Telefone Service, a/b) oder ISDN (Basisanschluß, 2B+D) ausgelegt ist, und
- ein Ethernet-Interface, welches erfindungsgemäß für den Internetzugang bestimmt ist.

Ein wesentlicher Aspekt der Erfindung besteht darin, daß in diesem Funkkommunikationssystem ein drahtloses Zugangsnetzwerk zum PSTN und ein drahtloses Zugangsnetzwerk zum Internet vereinigt werden. Bezüglich des PSTN erfolgt dies, indem die Einrichtung mit einer Ortsvermittlungsstelle verbunden ist, die Funkteilnehmer als reguläre Teilnehmer dieser Ortsvermittlungsstelle fungieren und der Betrieb der Teilnehmerschnittstellen an den Teilnehmerstationen im "off-hook" Verfahren erfolgt, das heißt, daß alle Signale, Signaltöne, Dienstmerkmale direkt zwischen Teilnehmerschnittstelle und Ortsvermittlungsstelle ausgetauscht werden.

Bezüglich des Internet erfolgt dies, indem die an die Ethernetschnittstelle der Teilnehmergeräte angeschalteten Rechner oder Rechnernetze der Kunden als Teilnehmer eines virtuellen LAN (wireless LAN) fungieren. Das LAN ist als Netzwerk mit einem nicht öffentlichen IP-Adressbereich gestaltet und besitzt basisstationsseitig über einen Router und eine Datenverbindung eine direkte Anschaltung zu einem ISP (Internet Service Provider). Die Teilnehmer besitzen zumindest eine fest zugewiesene Adresse aus dem besagten Adressbereich, können aber für spezielle Zwecke, wie zum Beispiel den Betrieb von Exchange-Servern, weitere Adressen erhalten, welche über den besagten Router in öffentliche Adressen umgesetzt werden können. Damit wird erstmalig speziell dem stationären Einsatz im gewerblichen Bereich Rechnung getragen, der diese Betriebsvariante erfordert.

Ein weiterer Aspekt der Erfindung besteht darin, daß im Airinterface des besagten Funkkommunikationssystems die Kapazitätsverteilung zwischen dem drahtlosen Zugangsnetzwerk zum PSTN und dem drahtlosen Zugangsnetzwerk zum Internet bedarfsabhängig gesteuert und angepaßt wird. Dies ist vorteilhaft für eine effektive Auslastung der Ressourcen, da Fernmeldeverkehr und Internetverkehr teilweise prägnant unterschiedliche Tagesprofile der Belastung aufweisen. Die Verteilungssteuerung erfolgt innerhalb bestimmter einstellbarer Grenzen, die Mindestanteile für POTS und Internetverbindungen garantieren. Die Verteilungssteuerung berücksichtigt innerhalb des zugelassenen Einstellbereiches einen Vorrang für POTS, welcher beinhaltet, daß die Übertragungskapazität bestehender Internetverbindungen zugunsten neu aufzubauender POTS-Verbindungen reduziert wird.

Ein weiterer Aspekt der Erfindung besteht darin, daß den über Funk angeschalteten Teilnehmern der simultane Zugang zum PSTN und zum Internet ermöglicht wird. Diese Eigenschaft korreliert mit dem vorgenannten Aspekt, indem für die einzelne Teilnehmerstation die Kapazitätsverteilung zwischen POTS und Internet bedarfsabhängig im Rahmen der maximalen Kapazität der Teilnehmerstation gesteuert wird, wobei die Anforderungen des POTS Vorrang besitzen.

Ein weiterer Aspekt der Erfindung besteht darin, daß im drahtlosen Zugangsnetzwerk zum PSTN eine effektive Ressourcenverwendung erfolgt, indem den POTS-Teilnehmern als Standardverbindung eine komprimierte Sprachübertragung bereitgestellt wird und anforderungsgesteuert höhere Übertragungskapazität für Fax- oder Modemübertragungen bereitgestellt wird. Im einzelnen beinhaltet dies:

- Es wird jede Verbindung zunächst als Sprachverbindung mit einer hohen Sprachkompression, beispielsweise auf 8 kbps nach G.729, eingerichtet. Moderne Sprachkompressionsverfahren, wie zum Beispiel das vorgenannte, sind mit subjektiv kaum feststellbaren Qualitätsverlusten verbunden bei gleichzeitig akzeptablen Verzögerungszeiten.
- Es erfolgt während der Verbindung eine Überwachung und Erkennung der Einleitung von Fax- oder Modemübertragungen und nur in diesem Falle die automatische Zuweisung einer höheren Übertragungskapazität. Dabei wird die Erhöhung der Übertragungsgeschwindigkeit für Faxübertragungen auf den benötigten Wert von $\geq$ 14,4 kbps entsprechend der Klassen G3/G4 eingestellt und für Modemübertragungen ein transparenter 64 kbps Kanal geschaltet, so daß Modemübertragungen bis zum Maximalwert von 57,6 kbps (V.90) möglich sind.
- Faxübertragungen werden derart vorgenommen, daß durch Einrichtungen in der Basisstation und der Teilnehmerstation mittels einer so genannten Fax-Relaysoftware die Faxsignale für die Übertragung im Airinterface wieder in das Basisband umgesetzt werden und dadurch im Airinterface nur die besagte Kapazitätszuweisung erforderlich ist, die dem Nennwert der Übertragungsrate der Faxverbindung entspricht.

Ein weiterer Aspekt der Erfindung besteht darin, daß durch das "off-hook"-Prinzip POTS-Teilnehmern alle Dienstmerkmale gewährleistet werden, die digitale Ortsvermittlungseinrichtungen standardmäßig auch analog angeschalteten drahtgebundenen Teilnehmern bieten.

Ein weiterer Aspekt der Erfindung besteht darin, daß über das drahtlose Zugangsnetzwerk zum Internet dem Teilnehmer über ein Ethernet-Interface seines Rechners oder seines Rechnernetzwerkes ein direkter Zugang zu einem Gateway eines ISP (Internet Service Provider) zur Verfügung steht und der Weg über das PSTN mit Anwahl einer Zugangsrufnummer eines ISP und Nutzung von Übertragung mittels Modem nicht erforderlich ist. Unabhängig davon kann der letztgenannte Weg vom Teilnehmer über seinen POTS-Anschluß alternativ oder simultan genutzt werden.

Ein weiterer Aspekt der Erfindung besteht darin, daß im drahtlosen Zugangsnetzwerk zum Internet dem Teilnehmer standardmäßig bei Verbindungsaufbau die maximale Kapazität der Teilnehmerstation zugewiesen wird. Ausnahmen können sein, daß an der gleichen Teilnehmerstation bereits eine POTS-Verbindung besteht, oder im Airinterface eine so hohe Gesamtlast vorliegt, daß eine geringere Zuweisung zwingend ist. Eine effektive Ressourcenverwendung erfolgt, indem

- die einem Teilnehmer zugewiesene Übertragungskapazität bei geringer Aktivität oder kurzzeitiger Inaktivität auf eine Minimalkapazität verringert wird, um bei erneut einsetzender höherer Aktivität wieder dynamisch auf den besagten maximal möglichen Wert erhöht zu werden. Die Minimalkapazität ergibt sich wie unten beschrieben durch die Kanalstruktur und Verfahren der Kanalzuweisung. Der Vorteil eines solchen Verfahrensschrittes ist, daß ene dynamische Kanalzuweisung auf der Grundlage einer bestehenden physikalischen Verbindung schneller erfolgen kann als bei abgebauter physikalischer Verbindung.
- Verbindungen von Teilnehmern, deren Übertragungskapazität bereits auf die Minimalkapazität reduziert wurde, bei weiter andauernder längerer Inaktivität physikalisch getrennt werden können, wobei in der Basisstation und der Teilnehmerstation die Verbindungsprozesse, die diese Verbindung steuerten, weiter für Zeiträume von Stunden bestehen bleiben. Bei erneuter Aktivität muß daher nur die physikalische Verbindung neu aufgebaut werden, wobei dies entsprechend den vorgenannten Verfahren mit der maximal möglichen Kapazität erfolgt.
- für die Übertragung im Airinterface eine paketorientierte Datenkomprimierung erfolgt.

Die Zeitkonstanten für die Trennung der Internetverbindung sind derart optimiert, daß während der Übertragung einer Internetseite die Pausen zwischen den einzelnen Paketen überbrückt werden und gegebenenfalls nur die Reduzierung der Übertragungskapazität wirksam wird. Derart wird eine Optimierung bezüglich der Häufigkeit der Prozeduren zum Verbindungsaufbau und der effektiven Auslastung des Airinterfaces vorgenommen.

Ein weiterer Aspekt der Erfindung besteht darin, daß das OA&M-System der Einrichtung für die Verbindung zu einem entfernten OA&M-Center das Internet nutzt. Die OA&M-Instanz des Funkkommunikationssystems ist Bestandteil der Basisstation. Zusätzlich kann an das Ethernet der Basisstation eine lokale OA&M-Einrichtung angeschaltet werden, welche direkten Zugriff zur OA&M-Instanz des Funkkommunikationssystems hat und über das Internet mit dem entfernten OA&M-Center kommunizieren kann. OA&M-Verbindungen zu den Teilnehmerstationen erfolgen paketorientiert, zur Minimierung des Overheads jedoch nicht TCP/IP-basiert

- als spezielle Serviceverbindungen,
- bei bestehenden IP-Verbindungen einer Teilnehmerstation in den Datenstrom dieser Verbindung gemultiplext,
- bei bestehenden POTS-Verbindungen in Abhängigkeit vom Umfang der zu übertragenden OA&M-Daten im Signalisierungskanal der POTS-Verbindung oder in einer simultanen speziellen Serviceverbindung.

Ein weiterer Aspekt der Erfindung besteht darin, daß im Airinterface das besonders störsichere Mulftplex/ Zugriffsverfahren DS CDM/CDMA (Direct Sequenz Code Division Multiplex / Code Division Multiple Access, im weiteren immer als CDMA bezeichnet) benutzt wird. Dieses Verfahren beinhaltet, daß Codesequenzen mit einer einheitlichen Länge von n Bit definiert werden, die zueinander orthogonal sind. Die Orthogonalität dieser Codesequenzen beinhaltet, daß bei Sequenzsynchronität ihre Kreuzkorrelationsfunktionen den Wert Null ergeben. Bei einer Sequenzlänge von n Bit können maximal genau n Sequenzen gefunden werden, die diese Bedingung erfüllen. Es können mehrere Sequenzfamilien gefunden werden, die innerhalb der Familie die Bedingung der Orthogonalität erfüllen. Zwischen den Mitgliedern der verschiedenen Sequenzfamilien ist diese Bedingung definitiv nicht erfüllt.

Die Anwendung des Verfahrens ermöglicht, daß mehrere parallele Datenströme, maximal bis zu n Stück entsprechend der Anzahl der Codesequenzen, parallel über einen gemeinsamen physikalischen Kanal übertragen und empfangsseitig wieder getrennt werden können. Hierzu werden die Datenströme beim Multiplexen bit- oder symbolsynchron an die maximal bis zu n Modulatoren entsprechend der Anzahl der Codesequenzen übergeben. Die Forderung der Synchronität ergibt sich aus der bereits genannten Eigenschaft der Codesequenzen, daß nur in diesem Falle deren Kreuzkorrelationsfunktionen den Wert Null haben, was Voraussetzung für die empfangsseitige Trennbarkeit ist. Die Modulatoren führen die Spreizung jedes Bits oder Symbols des einzelnen Datenstromes mit der ihnen zugewiesenen Codesequenz aus dem Vorrat der Codesequenzen durch, die mathematisch betrachtet einer Multiplikation des Bits oder Symbols mit der Codesequenz entspricht. Damit wird jedes Bit oder Symbol in eine Anzahl von n Zuständen umgesetzt, die zur Unterscheidung als "Chip" bezeichnet werden. Die am Ausgang der Modulatoren zur Übertragung anstehende Chiprate ist somit um den Faktor n höher als die eingangsseitige Bit- oder Symbolrate. Die so gespreizten Datenströme stellen unabhänge Kanäle dar, die durch ihre Codesequenz gekennzeichnet sind und deshalb als Codekanal bezeichnet werden. Diese Codekanäle werden danach additiv überlagert und für die Übertragung auf einen HF-Träger moduliert.

Wenn CDMA auch für "Multiple Access" eingesetzt wird, das heißt, daß eine Vielzahl von unabhängigen Quellen zu einem gemeinsamen Empfänger senden, muß am Empfängereingang für die Signale aller Quellen

- die Synchronität der Codesequenzen aller Codekanäle gewährleistet werden. Dies wird erfindungsgemäß durch eine Startup-Synchronisation und eine Synchronisation während des laufenden Betriebes gesichert, die unten beschrieben werden.
- der gleiche Empfangspegel der Codesequenzen aller Codekanäle gewährleistet werden. Dies wird erfindungsgemäß durch ein Powercontrol während des laufenden Betriebes gesichert, welches unten beschrieben wird.

Empfangsseitig ist ein HF-Empfänger angeordnet, welcher an seinem Ausgang ein demoduliertes Signal bereitstellt, welches die Überlagerung der Signale aller Codekanäle darstellt. Für jeden Codekanal ist ein Demodulator erforderlich, welcher die zu selektierende Codesequenz a priori kennen muß und eine Korrelation von Codesequenz und Eingangssignal durchführt. Korrelatoren oder Matched Filter, die hierfür benutzt werden, sind als in speziellen Schaltkreisen integrierte Hardwarelösungen erhältlich oder werden in Signalprozessoren softwaremäßig realisiert. Letzteres bietet sich an, da die Korrelation mathematisch betrachtet wieder eine Multiplikation des Eingangsdatenstromes mit der Codesequenz darstellt. Das Ausgangssignal des Korrelators muß anschließend noch bewertet werden, im einfachsten Falle in einer Schwellenwertschaltung, um den Dateninhalt des Codekanals wieder zu gewinnen.

Ein weiterer Aspekt der Erfindung besteht darin, daß als Duplexverfahren TDD (Time Division Duplex) benutzt wird, d.h. es wird zeitlich alternierend ein HF-Kanal für beide Übertragungsrichtungen genutzt. Dies ermöglicht, daß Sender und Empfänger der Einrichtungen auf eine gemeinsame Antenne arbeiten und zur Entkopplung von Senderausgang und Empfängereingang nur ein elektronischer Antennenumschalter benutzt wird und keine aufwendigen und teueren Duplexfilter wie bei FDD (Frequency Division Duplex) erforderlich sind. In der erfindungsgemäßen Einrichtung bilden eine Downlinkperiode, eine Schutzzeit und eine Uplinkperiode einen Duplexframe, im weiteren stets als Frame bezeichnet.

Ein weiterer Aspekt der Erfindung besteht darin, daß der Frame im TDM/TDMA genutzt wird und in einer beispielhaften Ausführung in 15 Timeslots gleicher Dauer, im weiteren als Slots bezeichnet, unterteilt ist. Die Zuordnung der Slots ist für alle Codekanäle identisch wie nachstehend beschrieben:

- Slot 0 bis 6 werden für die Aussendungen der Basisstation genutzt,
- Slot 7 ist zweigeteilt und beinhaltet eine Schutzzeit für den Laufzeitausgleich und eine Zeitphase für Anmeldung von Verbindungsanforderungen und die Startup Synchronisation für Teilnehmerstationen, die zeitweilig inaktiv waren. Die Schutzzeit für den Laufzeitausgleich berücksichtigt die maximale Entfernung, die zwischen der Basisstation und einer Teilnehmerstation zugelassen ist und hat eine Dauer der zweifachen Laufzeit für diese Entfernung inclusive die realen Umschaltzeiten von Empfangen auf Senden in der Teilnehmerstation. Die Anmelde- und Synchronisationsprozeduren werden unten beschrieben.
- Slot 8 bis 14 werden für die Aussendungen der Teilnehmerstationen genutzt.

Ein weiterer Aspekt der Erfindung besteht darin, daß ein Spektrum von unterschiedlichen Kanaltypen geschaffen ist und diese unterschiedlichen Kanaltypen flexibel in einem Baukastensystem zu unterschiedlichen Traffictypen kombinierbar sind und so unterschiedlichen Diensten und Übertragungsraten angepaßt werden können.

Ein weiterer Aspekt der Erfindung besteht darin, daß die Datenübertragung durch Verwendung eines FEC (Forward Error Correction) gesichert wird und für die Übertragung der komprimierten Sprachdaten, Daten der Fax- oder Modemübertragung in einer POTS-Verbindung und Daten der Layer 2 Verbindung für IP-, OA&M- sowie Signalisierungsdaten der POTS-Verbindungen unterschiedliche FEC-Level einstellbar sind. Ein weiterer Aspekt der Erfindung besteht darin, daß in der Uplinkrichtung zusätzlich zur Startupsynchronisation zwei Verfahren der periodischen Messung und Nachführung der Synchronisation der CDMA-Übertragungen im laufenden Betrieb simultan genutzt werden. Ein erstes Verfahren, welches eine Messung und Nachführung je Frame durchführt, und ein zweites Verfahren, welches mindestens eine Messung und Nachführung je 32 Frames mit erhöhter Genauigkeit gegenüber dem ersten Verfahren durchführt.

Ein Ausführungsbeispiel der Erfindung wird an Hand der beigefügten Zeichnungen näher erläutert. Es zeigen:

Figur 1 die Architektur des Funkkommunikationssystems in seiner Gesamtheit.
Figur 2 das Schichtenmodell des POTS Access-Networks und seine Verknüpfung mit dem Internet Access-Network
Figur 3 das Schichtenmodell des Internet Access-Network und seine Verknüpfung mit dem POTS Access-Network

Figur 4     das Kanalschema einer konkreten Ausführung der Erfindung bei Nutzung von CDMA in Verbindung mit TDM/TDMA und TDD.

Figur 5     die Struktur eines Multiframe_6 (MF_6) für einen Codekanal, basierend auf einem Kanalschema entsprechend Figur 4.

Figur 6     die Einordnung der speziellen Kanäle für Synchronisation und Steuerung sowie der Schutzzeit für den Laufzeitausgleich in das TDD und das Kanalschema entsprechend Figur 4.

Figur 7     die unterschiedlichen Strukturen von Slottypen und ihre Verwendung im Kanalschema entsprechend Figur 4.

Figur 8     die Struktur und Funktion eines Multiframe_32 (MF_32) für eine Ausführung der Erfindung mit n=32 Codekanälen.

Figur 9     eine detailliertere Darstellung eines Ausschnittes aus Figur 8.

Figur 10    den Aufbau von verschiedenen Typen von Packed Data Units.

Figur 11    das Baukastensystem von Traffictypen durch Kombination verschiedener Typen von Packed Data Units für POTS-Verbindungen oder stand alone IP-Verbindungen.

Figur 12    das Baukastensystem von Traffictypen durch Kombination verschiedener Typen von Packed

Data Units für Layer 2 Verbindungen bei parallelem Betrieb einer POTS-Verbindung. Sowohl die vorausgehenden allgemeinen Beschreibungen als auch die folgende detaillierte Beschreibung besitzen nur Beispielcharakter als mögliche Ausführungen der erfindungsgemäßen Einrichtungen und Verfahren und schränken die Ansprüche zur Erfindung nicht ein.

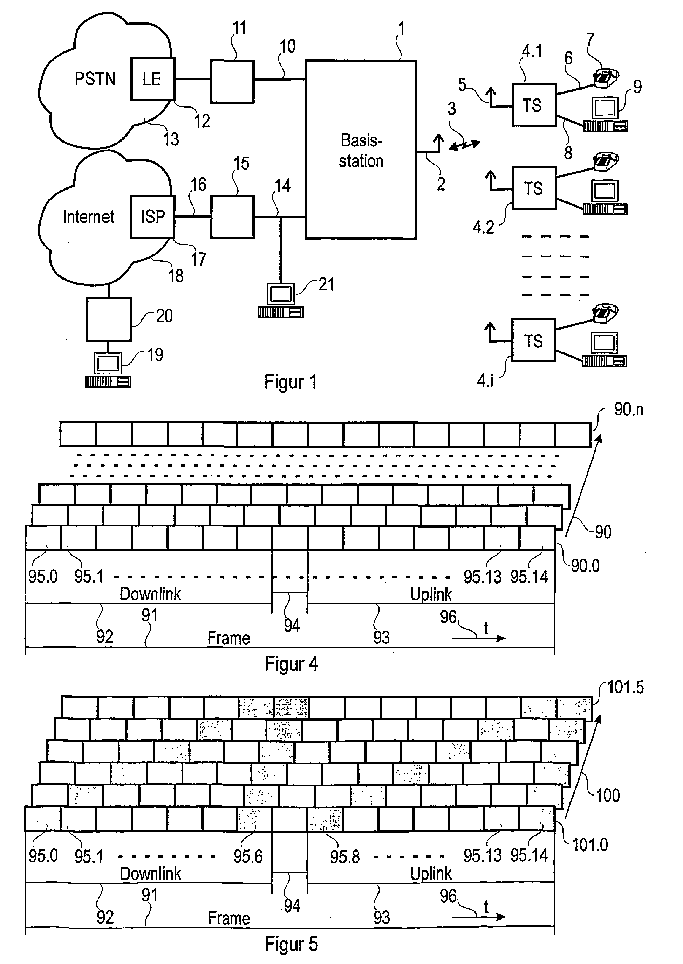

Figur 1 beschreibt die Architektur der Einrichtung in ihrer Gesamtheit. Eine Basisstation 1 besitzt eine Schnittstelle zum Airinterface 3 für die drahtlose Verbindung zu einer Vielzahl von Teilnehmerstationen 4.1 bis 4.i. Der Zugang zum Airinterface 3 erfolgt über eine Antenne 2, die gleichermaßen für den Sende- als auch den Empfangsbetrieb genutzt wird.

Die Basisstation 1 besitzt des weiteren eine PCM-Schnittstelle 10, die als eine oder mehrere E1- oder T1-PCM Trunklines ausgeführt ist und die die Basisstation 1 mit einer Ortsvermittlungseinrichtung 12 des PSTN 13 verbindet. Die Schnittstelle 10 ist als konzentriertes Interface ausgeführt, das heißt, daß die Anzahl der PCM-Verbindungen der Anzahl der möglichen Verbindungen im Airinterface entspricht oder diese nur soweit übersteigt, wie es sich durch die Quantelung der E1- oder T1-PCM Trunklines ergibt. Bei Bedarf werden optionale Anschalteinrichtungen 11 in die Verbindung zwischen der Basisstation 1 und der Ortsvermittlungseinrichtung 12 eingeschaltet, wenn die Ortsvermittlungseinrichtung 12 ein konzentriertes Interface nicht unterstützt, sondern nur teilnehmerbezogene Verbindungen wie TIP/RING (a/b) oder V5.1 bietet. In diesem Falle haben die Anschalteinrichtungen 11 die Aufgabe der physikalischen Anpassung, der Protokollumsetzung und Umsetzung von teilnehmerbezogenen auf konzentrierte Verbindungen. Ein weiterer Grund für den Einsatz der Anschalteinrichtungen 11 kann sein, wenn von der Ortsvermittlungseinrichtung 12 ein Protokoll geboten wird, welches von der Basisstation 1 nicht unterstützt wird

Die Basisstation 1 besitzt des weiteren eine Schnittstelle 14, welche als eine Ethernetschnittstelle ausgeführt ist. An das Ethernet ist ein Router oder Proxyserver 15 angeschlossen, der über eine Datenleitung 16 mit einem Netzzugang eines ISP 17 (Internet Service Provider) verbunden ist, über welchen ein Zugang zum Internet 18 besteht. An das Ethernet ist des weiteren eine lokale OA&M-Einrichtung 21 angeschlossen. Bestandteil der Einrichtung ist weiterhin ein OA&M-Center 19, welches über einen Router/ Proxyserver 20 mit dem Internet 18 (über einen hier nicht dargestellten ISP, der mit dem erstgenannten nicht identisch sein muß) verbunden ist. Das OA&M-Center 19 ist gegebenenfalls für eine Mehrzahl von entfernten Basisstationen 1 vorgehalten.

Die Teilnehmerstationen 4 besitzen eine Schnittstelle zum Airinterface 3 für die drahtlose Verbindung zur Basisstation 1. Der Zugang zum Airinterface 3 erfolgt über eine Antenne 5, die gleichermaßen für den Sende- als auch den Empfangsbetrieb genutzt wird. Des weiteren besitzen die Teilnehmerstationen 4 jeweils ein PSTN-Teilnehmerinterface 6, welches für POTS (TIP/RING, a/b) oder ISDN (Basisanschluß, 2B+D) ausgelegt ist, und ein Ethernet-Interface 8, welches erfindungsgemäß für den Internetzugang bestimmt ist. Das PSTN-Teilnehmerinterface 6 erlaubt den Anschluß von Endgeräten 7 dem Diensttyp entsprechend und nach Wahl des Kunden. Das Ethernet-Interface 8 erlaubt den Anschluß von Rechnern 9 für den direkten Zugang zum Internet, wobei es sich um Einzelrechner oder bei Rechnernetzen um Router, Proxyserver oder Rechner mit einer Proxyserver-Emulation handeln kann.

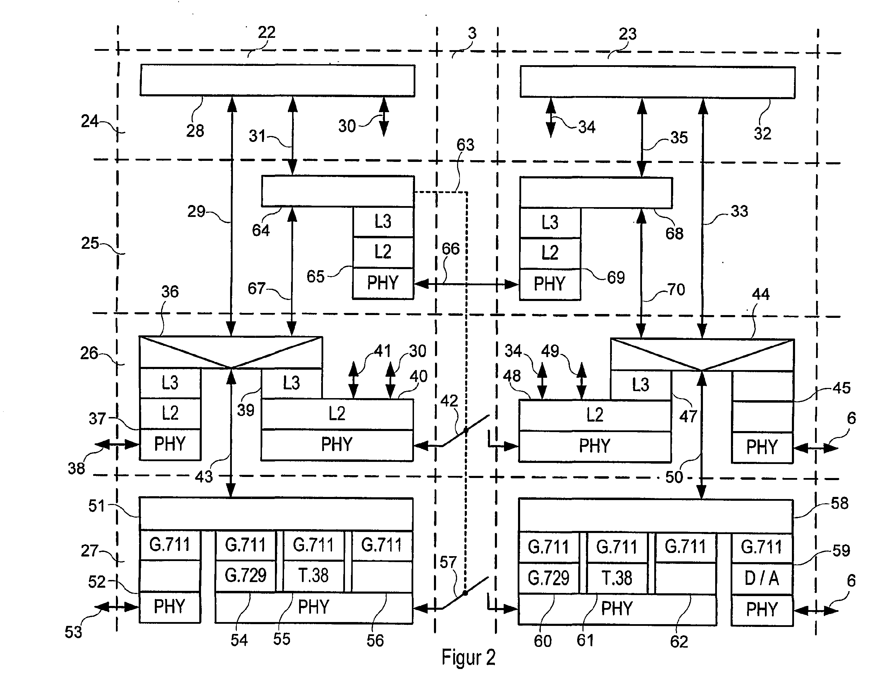

In Figur 2 wird das Schichtenmodell des POTS Access-Networks und seine Verknüpfung mit dem Internet Access-Network dargestellt. Die Spalten der Darstellung beinhalten die für die POTS- und Internet-Access-Networks relevanten Elemente 22 der Basisstation 1 (Figur 1), die entsprechenden Elemente 23 der Teilnehmerstationen 4 und das Airinterface 3. Die Reihen der Darstellung beinhalten die verschiedenen Planes, umfassend den Management Plane 24, den Physical Signalling Plane 25, den POTS Signalling Plane 26 und den User Plane 27.

Zum Management Plane 24 gehören die OA&M Einrichtungen 28 der Basisstation 1, umfassend:

- die Teilnehmeradministration und Teilnehmerauthentifikation, inclusive der Vorrangmerkmale bestimmter Teilnehmer, wie beispielsweise die Zugehörigkeit zu Katastrophengruppen (Feuerwehr, Bergrettung u.ä.) oder Einstufung

EP 1 332 586 B1

als VIP (Very Important Person), die in bestimmten Situation ausschließlich zum kommenden wie gehenden Verbindungsaufbau berechtigt sind.

- die zentrale Steuerung, welche die Administration der aktiven Verbindungen durchführt und die POTS Control 36 erzeugt.
- den Ressourcenmanager, welcher die Kanalverwaltung und Kanalzuweisung an die POTS Control 36 und die IP Control 74 (Figur 3) durchführt. Kanalzuweisungen erfolgen beim Verbindungsaufbau und bei Veränderungen des Kanalbedarfs während einer Verbindung auf Grund der Anforderungen eines POTS Control 36 oder eines IP Control 74, oder bei der vom Ressourcenmanager kontinuierlich durchzuführenden Defragmentierung der Kanalbelegungstabelle als Weisung an die POTS Control 36 oder IP Control 74.
- Verbindungen 29 zu den POTS Control 36 der aktiven POTS-Verbindungen. Dargestellt ist nur eine Verbindung zu einem derartigen Prozess. Über die Verbindung 29 werden beim Aufbau eines POTS Control 36 die Teilnehmerauthentifikation und die Ressourcenzuweisung an das POTS Control und während der bestehenden Verbindung Veränderungen der Ressourcenzuweisung behandelt.
- Verbindungen 30 zu den Service Access Points der Layer 2 40 der aktiven POTS-Verbindungen. Über die Verbindungen 30 werden OA&M Daten als Paketdaten mit den OA&M Einrichtungen 32 der Teilnehmerstationen 4 ausgetauscht. Die Übertragung kann sowohl eingebettet in eine bestehende Verbindung wie auch über eine speziell zum besagten Zwecke von den OA&M Einrichtungen 28 oder 32 initiierte Verbindungen erfolgen.
- eine Verbindung 31 zum Airinterface Control 64 der Basisstation 1.

Der besagte Ressourcenmanager in der OA&M-Einrichtung (28) der Basisstation (1), welcher mit den POTS Control (36) der aktiven POTS-Verbindungen, den IP Control (74) der aktiven IP-Verbindungen und dem Airinterface Control (64) verbunden ist, führt eine Kanalbelegungstabelle und führt

- bei Aufbau einer gehenden Verbindung auf Grund einer vom Airinterface Control (64) kommenden Anforderung, initiiert durch die Instanzen POTS Control (44) oder IP Control (81) eine Kanalzuweisung an die Instanzen POTS Control (36) oder IP Control (74) entsprechend angefordertem Verbindungstyp durch,
- bei Aufbau einer kommenden Verbindung, bei Veränderung des Kapazitätsbedarfs oder bei Abbruch einer bestehenden Verbindung auf Grund einer von den Instanzen POTS Control (36) oder IP Control (74) kommenden Anforderung eine erste Kanalzuweisung oder Veränderung oder Löschung einer Kanalzuweisung an die anfordernde Instanz durch,
- bei Erreichen der Grenzbelastung des Systems beziehungsweise bei Beendung dieses Zustandes die Defaultwerte der Kanalzuweisung für bestehende und neu einzurichtende IP-Verbindungen reduziert beziehungsweise wieder auf den Standardwert setzt und eine entsprechende Veränderung der Kanalzuweisung an die Instanzen POTS Control (36) oder IP Control (74) durch,
- bei Defragmentierung der Kanalbelegungstabelle eine Kanalumweisung an die Instanzen POTS Control (36) und/ oder IP Control (74) dahingehend durch, daß eine maximale Anzahl unbelegter Codekanäle (90) geschaffen wird, indem Verbindungen, welche nicht die volle Kapazität eines Codekanals (90) belegen, in andere Codekanäle bis zur vollen Belegung dieser Codekanäle umgewiesen werden.

Zum Management Plane 24 gehören des weiteren die OA&M Einrichtungen 32 der Teilnehmerstationen 4, umfassend:

- die Teilnehmeradministration und Teilnehmerauthentifikation des Teilnehmers an der betreffenden Teilnehmerstation, inclusive der Vorrangmerkmale des bestimmten Teilnehmers entsprechend der obigen Erklärung.
- eine Verbindung 33 zum POTS Control 44 bei aktiver POTS-Verbindung. Über die Verbindung 33 wird beim Aufbau eines POTS Control 44 die Teilnehmerauthentifikation behandelt.
- eine Verbindung 34 zu einem Service Access Point des Layer 2 48. Über die Verbindung 34 werden OA&M Daten als Paketdaten mit der OA&M Einrichtungen 28 der Basisstation 1, wie oben beschrieben, ausgetauscht.
- eine Verbindung 35 zum Airinterface Control 68 der Teilnehmerstationen 4.

Der POTS Signalling Plane 26 umfaßt in der Basisstation 1

- die POTS Control 36 der aktiven POTS-Verbindungen, hier nur dargestellt für eine derartige Verbindung. Die POTS Control 36 besitzen Verbindungen 29 zu den OA&M Einrichtungen 28, Verbindungen 67 zum Airinterface Control 64 und eine Verbindung 43 zum User Control 51 der jeweiligen aktiven POTS-Verbindung,
- mit dem POTS Control 36 verbundene Protokollstacks 37, hier nur dargestellt für eine derartige Verbindung, umfassend Layer 3, Layer 2 und Physical Layer, welche ein Interface für Signalisierung 38 zur Ortsvermittlungsstelle 12 (Figur 1) besitzen und

- mit dem POTS Control 36 verbundene airinterfaceseitige Protokollstacks, hier nur dargestellt für eine derartige Verbindung, umfassend Layer 3 39, Layer 2 40 und Physical Layer, welch letzterer eine Signalisierungsverbindung 42 im Airinterface 3 besitzt. Der Layer 3 39 ist über einen von drei Service Access Points des Layer 2 40 mit diesem verbunden. Ein weiterer Service Access Point 41 wird mit dem IP-Verkehr belegt, ein weiterer Service Access Point 30 wird mit dem OAM-Datenverkehr belegt.

Der POTS Signalling Plane 26 umfaßt des weiteren in den Teilnehmerstationen 4

- ein POTS Control 44 bei einer aktiven POTS-Verbindung. Das POTS Control 44 besitzt eine Verbindung 33 zur OA&M Einrichtung 32, eine Verbindung 70 zum Airinterface Control 68 und eine Verbindung 50 zum User Control 58,
- einen teilnehmerseitigen Protokollstack 45, welcher entsprechende Wandler und Generatoren für die analoge Signalisierung der a/b-Schnittstelle 6 umfaßt und
- einen airinterfaceseitigen Protokollstack, umfassend Layer 3 47, Layer 2 48 und Physical Layer, welch letzterer eine Signalisierungsverbindung 42 im Airinterface 3 besitzt. Der Layer 3 47 ist über einen von drei Service Access Points des Layer 2 48 mit diesem verbunden. Der Service Access Point 49 wird mit dem IP-Verkehr belegt, der Service Access Point 34 wird mit dem OAM-Datenverkehr belegt.

Der User Plane 27 umfaßt in der Basisstation 1

- die Data Control 51 der aktiven POTS-Verbindungen, hier nur dargestellt für eine derartige Verbindung, welche eine Verbindung 43 zu dem jeweiligen POTS Control 36 besitzen,
- mit den Data Control 51 verbundene Stacks 52, hier nur dargestellt für eine derartige Verbindung, welche bidirektional Daten mit 64 kbps nach G.711 umsetzen und ein Interface 53 zu einem B-Kanal der Trunklines besitzen,
- mit den Data Control 51 verbundene Stacks 54, hier nur dargestellt für eine derartige Verbindung, welche bidirektional die Sprachkompression/-dekompression nach G.729 durchführen,
- mit den Data Control 51 verbundene Stacks 55, hier nur dargestellt für eine derartige Verbindung, welche bidirektional die Datenumsetzung nach T.38 für die Faxübertragung mit 14,6 kbps durchführen,
- mit den Data Control 51 verbundene Stacks 56, hier nur dargestellt für eine derartige Verbindung, welche bidirektional Daten mit 64 kbps nach G.711 umsetzen und
- mit den Stacks 54, 55 und 56 verbundene Physical Layer, hier nur dargestellt für eine derartige Verbindung, welche ein Interface 57 zum Airinterface, 3 besitzen.

Durch das Data Control 51 erfolgt

- das Monitoring des Datenstromes hinsichtlich der Betriebsarten Voice, Fax oder Modem,
- über die Verbindung 43 die Signalisierung der festgestellten Betriebsart an das POTS Control 36 und Anforderung der entsprechenden Übertragungsrate,
- nach positiver Quittierung durch das POTS Control 36 die alternative Umschaltung auf einen der Stacks 54, 55 oder 56, wobei die Defaulteinstellung bei Einrichtung einer POTS-Verbindung stets Voice mit Sprachkompression und Nutzung des Stacks 54 ist.

Der User Plane 27 umfaßt des weiteren in der Teilnehmerstation 4 eine adäquate Einrichtung Data Control 58, wie oben für die Basisstation 1 beschrieben, verbunden mit

- einem Stack 59, welcher bidirektional die A/D- und D/A-Wandlung zwischen der analogen Endgeräteschnittstelle 6 und dem 64 kbps Datenstrom realisiert und
- den alternativ zu benutzenden Stacks 60, 61 und 62 für die Betriebsarten Voice, Fax und Modem entsprechend Beschreibung zu den Stacks 54, 55 und 56.

Durch das Data Control 58 werden Verfahrensschritte adäquat dem Data Control 51 durchgeführt. Der synchrone Betrieb beider Einrichtungen in Basisstation 1 und Teilnehmerstation 4 wird von den POTS Control 36 und 44 über entsprechende Signalisierung gesichert. Die Anforderung/Abmeldung von Datenrate und Kanalzuweisung, angepaßt an die jeweilige Betriebsart, erfolgt in jedem Falle durch den POTS Control 36 in der Basisstation über die Verbindung 29 bei der OA&M-Einrichtung 28.

Der Physical Signalling Plane 25 umfaßt in der Basisstation 1

- ein Airinterface Control 64, welches eine Verbindung 31 mit der OA&M-Einrichtung 28 und Verbindungen 67 zu den POTS Control 36 der aktiven POTS-Verbindungen besitzt.

- einen mit dem Airinterface Control 64 verbundenen Protokollstack 65, umfassend Layer 3, Layer 2 und Physical Layer, welcher ein Interface 66 für die Accesssteuerung und den Aufbau von Verbindungen über das Airinterface 3 besitzt.
- Eine virtuelle Betätigung 63 für die schaltbaren Verbindungen 42 und 57, welche ausdrückt, daß beim Aufbau einer Verbindung mit der Kanalzuweisung über die Airinterface Control 64 und 68 besagte Verbindungen 42 und 57 geschlossen werden.

Der Physical Signalling Plane 25 umfaßt des weiteren in der Teilnehmerstation 4

- ein Airinterface Control 68, welches eine Verbindung 35 mit der OA&M-Einrichtung 32 und eine Verbindung 67 zum POTS Control 44 bei aktiver POTS-Verbindungen besitzt und
- einen mit dem Airinterface Control 68 verbundenen Protokollstack 69, umfassend Layer 3, Layer 2 und Physical Layer, welcher ein Interface 66 für die Accesssteuerung und den Aufbau von Verbindungen über das Airinterface 3 besitzt.

Das Interface 66 ist unsymmetrisch aufgebaut und nutzt in der Downrichtung einen Broadcastchannel (BCH) und in der Uprichtung einen Random Access Channel (RACH) unterschiedlicher Kapazität und Einordnung in das Kanalschema entsprechend nachfolgender Beschreibung.

Das Zusammenwirken der Einrichtungen bei einem kommenden Ruf für einen Funkteilnehmer erfolgt wie nachstehend beschrieben:

- Ein über das Interface 38 aus Richtung Ortsvermittlungsstelle 12 eingehendes SETUP wird im Protokollstack 37 geparkt und der POTS Control 36 mit Übergabe der Teilnehmerdaten aktiviert.
- Vom POTS Control 36 wird über die Verbindung 29 bei der OA&M-Einrichtung 28 der Teilnehmer hinsichtlich Akzeptanz, Vorrangmerkmalen und Zustand abgefragt und eine Kanalzuweisung angefordert.
- Eine positive Rückmeldung enthält die Identifikation (ID) und die Vorrangmerkmale dieser Teilnehmerstation 4

  • und in einem ersten Scenario, daß keine IP-Verbindung zu der besagten Teilnehmerstation 4 besteht, in welchem Fall ein Kanal zugewiesen wird, wobei der Defaultwert die Zuweisung für eine komprimierte Sprachverbindung ist. Im Falle dieses ersten Scenarios wird vom POTS Control 36 über die Verbindung 67 beim Airinterface Control 64 mit Angabe des zugewiesenen Kanals der Aufbau der Verbindung angefordert. Eine positive Rückmeldung beinhaltet, daß mit der Umschaltung der Teilnehmerstation 4 in den zugewiesenen Kanal virtuell die Betätigung 63 das Signalisierungsinterface 42 und Userdateninterface 57 durchgeschaltet hat. Das Verfahren des Verbindungsaufbaus wird unten beschrieben

  • beziehungsweise in einem zweiten Scenario, daß eine IP-Verbindung zu der besagten Teilnehmerstation 4 bereits besteht, in welchem Fall die Nummer des IP Control 74 (Figur 3) übergeben und ein Kanal für Nutzdaten im User Plane 27 zugewiesen wird, wobei die Zuweisung als Splitting der bisher für die IP-Verbindung ausschließlich benutzten Kapazität erfolgt. Von der OA&M-Einrichtung 28 erfolgt über die Verbindung 72 (Figur 3) eine Aktualisierung der Kanalzuweisung an das IP Control 74

- Vom POTS Control 36 wird das geparkte SETUP des kommenden Rufes über die Signalisierungsverbindung an den airinterfaceseitigen Layer 3 39 übergeben. Der weitere Ablauf erfolgt entsprechend fernmeldetypischer Verfahren.
- In der Teilnehmerstation 4 erfolgt die Initialisierung des POTS Control 44 im Falle des ersten Scenarios, indem vom Airinterface Control 68 über die Verbindung 35 die Verbindungsanforderung an die OA&M-Einrichtung 32 übergeben und bei positiver Bestätigung von ebendieser über die Verbindung 33 das POTS Control 44 angewiesen wird. Im Falle des zweiten Scenarios erfolgt die Initialisierung des POTS Control 44 über die bestehende Verbindung, indem die Signalisierung vom Lyer 2 48 über den entsprechenden Service Access Point an den Layer 3 47 übergeben wird. Vom POTS Control 44 erfolgt über die Verbindung 33 eine Statusmeldung an die OA&M-Einrichtung 32 und Rückbestätigung durch ebendiese.

Das Zusammenwirken der Einrichtungen bei einem gehenden Ruf eines Funkteilnehmers erfolgt wie nachstehend beschrieben:

- Ein "hook off' an der a/b-Schnittstelle 6 wird über Wandler im Protokollstack 45 umgesetzt und die Information dem POTS Control 44 übergeben.
- Vom POTS Control 44 wird über die Verbindung 33 bei der OA&M-Einrichtung 32 der Teilnehmer hinsichtlich Akzeptanz, Vorrangmerkmalen und Zustand abgefragt.

- Eine positive Rückmeldung enthält die Identifikation (ID) und Vorrangmerkmale der Teilnehmerstation 4

  • und in einem ersten Scenario, daß keine IP-Verbindung zu der besagten Teilnehmerstation 4 besteht. Im Falle dieses ersten Scenarios wird vom POTS Control 44 über die Verbindung 70 beim Airinterface Control 68 der Aufbau der Verbindung angefordert.
  • beziehungsweise in einem zweiten Scenario, daß eine IP-Verbindung zu der besagten Teilnehmerstation 4 und ein IP Control 81 (Figur 3) bereits bestehen. Im Falle dieses zweiten Scenarios wird vom POTS Control 44 eine Verbindungsanforderung über den Layer 3 47 und dessen separaten Service Access Point in den Layer 2 48 eingespeist.

- In der Basisstation 1 erfolgt die Initialisierung eines POTS Control 36 im Falle des ersten Scenarios, indem vom Airinterface Control 64 über die Verbindung 31 die Verbindungsanforderung an die OA&M-Einrichtung 28 übergeben und bei positiver Bestätigung von ebendieser über die Verbindung 29 das POTS Control 36 angewiesen wird. Im Falle des zweiten Scenarios erfolgt die Initialisierung eines POTS Control 36 über die bestehende Verbindung, indem die Signalisierung vom Lyer 2 40 über den entsprechenden Service Access Point an den Layer 3 39 übergeben wird. Vom POTS Control 36 erfolgt über die Verbindung 29 eine Verbindungs- und Kanalanforderung an die OA&M-Einrichtung 28. Ab diesem Zeitpunkt erfolgt der weitere Ablauf identisch zum Verfahren bei kommendem Ruf.
- Nach positiver Rückmeldung und Kanalzuweisung wird vom POTS Control 44 in der Teilnehmerstation 4 ein SETUP generiert und über die Signalisierungsverbindung an den airinterfaceseitigen Layer 3 47 übergeben. Der weitere Ablauf erfolgt entsprechend fernmeldetypischer Verfahren.

In Figur 3 wird das Schichtenmodell des Internet Access-Network und seine Verknüpfung mit dem POTS Access-Network dargestellt. Die Spalten der Darstellung beinhalten identisch zu Figur 2 die für die POTS-und Internet-Access-Networks relevanten Elemente 22 der Basisstation 1 (Figur 1), die entsprechenden Elemente 23 der Teilnehmerstationen 4 und das Airinterface 3. Die Reihen der Darstellung beinhalten die verschiedenen Planes, umfassend den Management Plane 24, den Physical Signalling Plane 25 und den IP Plane 71.

Der Management Plane 24 wurde in Firgur 2 bereits beschrieben. Darüber hinaus besitzt die OA&M-Einrichtung 28 in der Basisstation 1 zusätzlich eine Verbindung 72 zum IP Control 74 und in der Teilnehmerstation 4 die OA&M-Einrichtung 32 zusätzlich eine Verbindung 73 zum IP Control 81.

Der Physical Signalling Plane 25 wurde in Firgur 2 bereits beschrieben. Darüber hinaus besitzt das Airinterface Control 64 in der Basisstation 1 zusätzlich eine Verbindung 80 zum IP Control 74 und in der Teilnehmerstation 4 das Airinterface Control 68 zusätzlich eine Verbindung 87 zum IP Control 81.

Der IP Plane 71 umfaßt in der Basisstation 1

- die IP Control 74 der aktiven IP-Verbindungen, hier nur dargestellt für eine derartige Verbindung. Die IP Control 74 besitzen Verbindungen 72 zu den OA&M Einrichtungen 28 und Verbindungen 80 zum Airinterface Control 64,
- einen mit der Vielzahl der IP Control 74 verbundenen internetseitigen Protokollstack, umfassend einen IP-Address-Monitor 75 und einen Ethernet Protokollabschluß 76, welcher ein Interface 14 für den Anschluß an den Router 15 (Figur 1) besitzt. Der IP-Address-Monitor 75 übernimmt in der Downrichtung die vom Ethernet Protokollabschluß 76 ausgespeisten IP-Pakete, analysiert deren Zieladresse und übergibt die IP-Pakete an die teilnehmerbezogenen IP Control (74), welchen die jeweilige Zieladresse zugeordnet ist. Der IP-Address-Monitor 75 übernimmt in der Uprichtung die von den IP Control (74) ausgespeisten IP-Pakete, analysiert deren Zieladresse und übergibt die IP-Pakete bei einer externen Zieladresse an den Ethernet Protokollabschluß (76) oder bei einer Zieladresse innerhalb des Zugangsnetzwerkes in die Downlinkrichtung für die weitere Übertragung zu einem der teilnehmerbezogenen IP Control (74) entsprechend obenstehender Beschreibung.
- mit den IP Control 74 verbundene airinterfaceseitige Protokollstacks, hier nur dargestellt für eine derartige Verbindung, umfassend eine SAR-Einrichtung 78, Layer 2 40 und Physical Layer, welch letzterer eine Paketdatenverbindung 42 im Airinterface 3 besitzt. Die SAR-Einrichtung 78 ist über einen von drei Service Access Points des Layer 2 40 mit diesem verbunden. Ein weiterer Service Access Point 79 wird mit der Signalisierung des Layer 3 39 (Figur 2) einer POTS-Verbindung belegt, ein weiterer Service Access Point 30 wird mit dem OAM-Datenverkehr belegt.

Der IP Plane 71 umfaßt desweiteren in den Teilnehmerstationen 4

- eine IP Control 81 bei einer aktiven IP-Verbindung. Das IP Control 81 besitzt eine Verbindung 73 zur OA&M Einrichtung 32 und eine Verbindung 87 zum Airinterface Control 68,
- einen mit dem IP Control 81 verbundenen teilnehmerseitigen Protokollstack, umfassend ein Address Change 82 und einen Ethernet Protokollabschluß 83, welcher ein Interface 8 für den Anschluß an die Einrichtungen des Teilnehmers besitzt.

- einen mit dem IP Control 81 verbundenen airinterfaceseitigen Protokollstack, umfassend eine SAR-Einrichtung 85, Layer 2 48 und Physical Layer, welch letzterer eine Paketdatenverbindung 42 im Airinterface 3 besitzt. Die SAR-Einrichtung 85 ist über einen von drei Service Access Points des Layer 2 48 mit diesem verbunden. Ein weiterer Service Access Point 86 wird mit der Signalisierung des Layer 3 47 (Figur 2) einer POTS-Verbindung belegt, ein weiterer Service Access Point 34 wird mit dem OAM-Datenverkehr belegt.

Die SAR-Einrichtungen 78 und 85 führen bidirektional eine Segmentierung und Reassemblierung der IP-Pakete durch. Es wird eine rein physische Segmentierung durchgeführt, welche nicht mit einer Änderung der Datagrammlänge verbunden ist, wie sie zwischen verschiedenen Netzwerktopologien vorgenommen wird. Insofern ist die Segmentierung nicht mit Eingriffen in Protokoll und Header verbunden und als transparent zu bezeichnen. Die Segmentierung bewirkt, daß bei Störungen in der Datenübertragung im Airinterface durch die Layer 2 40 und 48 nur kurze Datensegmente und nicht komplette IP-Pakete wiederholt übertragen werden müssen.

Das Address Change 82 wird optional eingesetzt. Es übersetzt die im IP-Zugangsnetzwerk benutzten teilnehmerspezifischen Adressen in eine oder einige für alle Teilnehmer konstante Adressen und umgekehrt. Dies vermeidet, daß dem Teilnehmer in jedem Falle seine Adresse im Zugangsnetzwerk spezifisch mitgeteilt werden muß und ermöglicht, Adressen im IP-Zugangsnetzwerk zu verändern, ohne daß der Teilnehmer auf Grund dessen Aktivitäten zu entwickeln hat. Für diesen Fall ist lediglich erforderlich, daß über die OA&M-Wege in das Address Change 82 die neue teilnehmerspezifische Adresse eingetragen wird.

Das Zusammenwirken der Einrichtungen beim Aufbau einer IP-Verbindung bei kommendem Verkehr für einen Funkteilnehmer erfolgt wie nachstehend beschrieben:

- Ein erstes IP-Paket, welches über das Ethernet Interface 14 eingeht, wird vom Ethernet Protokollabschluß 76 an den IP Address Monitor 75 übergeben, welcher die Zieladresse prüft und das Paket an das dieser Zieladresse entsprechende IP Control 81 weitergibt.
- Vom IP Control 74 wird über die Verbindung 72 bei der OA&M-Einrichtung 28 der Teilnehmer hinsichtlich Akzeptanz und Zustand abgefragt.
- Eine positive Rückmeldung enthält die Identifikation (ID) der Teilnehmerstation 4 sowie eine Kanalzuweisung

  • und in einem ersten Scenario, daß keine POTS-Verbindung der besagten Teilnehmerstation 4 besteht. Im Falle dieses ersten Scenarios wird vom IP Control 74 über die Verbindung 80 beim Airinterface Control 64 der Aufbau der Verbindung angefordert.
  • beziehungsweise in einem zweiten Scenario, daß eine POTS-Verbindung der besagten Teilnehmerstation 4 und ein POTS Control 36 (Figur 2) bereits bestehen. Im Falle dieses zweiten Scenarios wird vom IP Control 74 eine Verbindungsanforderung über die SAR-Einrichtung 78 und deren separaten Service Access Point in den Layer 2 40 eingespeist. Im Falle dieses zweiten Scenarios enthält die Kanalzuweisung zusätzlich die Angabe über den für POTS-Nutzdaten im User Plane 27 zu benutzenden Kanal

- In der Teilnehmerstation 4 erfolgt die Initialisierung eines IP Control 81 im Falle des ersten Scenarios, indem vom Airinterface Control 68 über die Verbindung 35 die Verbindungsanforderung an die OA&M-Einrichtung 32 übergeben und bei positiver Bestätigung von ebendieser über die Verbindung 73 das IP Control 81 angewiesen wird. Im Falle des zweiten Scenarios erfolgt die Initialisierung des IP Control 81 über die bestehende Verbindung, indem die Verbindungsanforderung und Kanalzuweisung vom Layer 2 48 über den entsprechenden Service Access Point an die SAR-Einrichtung 85 und weiter an das IP Control 81 übergeben werden. Vom IP Control 81 erfolgt über die Verbindung 73 eine Statusmeldung an die OA&M-Einrichtung 32.

Das Zusammenwirken der Einrichtungen beim Aufbau einer IP-Verbindung bei gehendem Verkehr eines Funkteilnehmers erfolgt wie nachstehend beschrieben:

- Ein erstes IP-Paket, welches über das Ethernet Interface 8 eingeht, wird vom Ethernet Protokollabschluß 83 an das Address Change 82 übergeben, welches die Absenderadresse in die teilnehmerspezifische Netzwerkadresse tauscht und das Paket an das IP Control 81 weitergibt.
- Vom IP Control 81 wird über die Verbindung 73 bei der OA&M-Einrichtung 32 der Teilnehmer hinsichtlich Akzeptanz und Zustand abgefragt.
- Eine positive Rückmeldung enthält die Identifikation (ID) der Teilnehmerstation 4

  • und in einem ersten Scenario, daß keine POTS-Verbindung der besagten Teilnehmerstation 4 besteht. Im Falle dieses ersten Scenarios wird vom IP Control 81 über die Verbindung 87 beim Airinterface Control 68 der Aufbau der Verbindung angefordert.

• beziehungsweise in einem zweiten Scenario, daß eine POTS-Verbindung der besagten Teilnehmerstation 4 und ein POTS Control 44 (Figur 2) bereits bestehen. Im Falle dieses zweiten Scenarios wird vom IP Control 81 eine Verbindungsanforderung über die SAR-Einrichtung 85 und deren separaten Service Access Point in den Layer 2 48 eingespeist.

- In der Basisstation 1 erfolgt die Initialisierung eines IP Control 74 im Falle des ersten Scenarios, indem vom Airinterface Control 64 über die Verbindung 31 die Verbindungsanforderung an die OA&M-Einrichtung 28 übergeben und bei positiver Bestätigung von ebendieser über die Verbindung 72 das IP Control 74 angewiesen wird. Im Falle des zweiten Scenarios erfolgt die Initialisierung eines IP Control 74 über die bestehende Verbindung, indem die Signalisierung vom Lyer 2 40 über den entsprechenden Service Access Point an die SAR-Einrichtung 78 und weiter an das IP Control 74 übergeben wird. Vom IP Control 74 über die Verbindung 72 eine Verbindungs- und Kanalanforderung an die OA&M-Einrichtung 28.
- Eine positive Rückmeldung der OA&M-Einrichtung 28 beinhaltet die Kanalzuweisung, welche im Falle des zweiten Scenarios zusätzlich die Angabe über den für POTS-Nutzdaten im User Plane 27 zu benutzenden Kanal enthält. Die Kanalzuweisung wird vom IP Control 74 im Falle des ersten Scenarios über das Airinterface Control 64 und im Falle des zweiten Scenarios über die bestehende Verbindung für POTS-Signalisierung an die Teilnehmerstation 4 übertragen.

Der Fall des kommenden IP-Verkehrs wird aus zwei Gründen beachtet und realisiert:

- Teilnehmer können eine öffentliche IP-Adresse für Exchange Server oder Web Server besitzen und müssen daher für kommenden Verkehr erreichbar sein.
- Eine IP-Verbindung kann auf Grund von Inaktivität getrennt worden sein und die erneute Aktivität erscheint als kommender Verkehr.

Die Ressourcenzuteilung für eine IP-Verbindung erfolgt in drei Stufen:

- Der Defaultwert bei Einrichtung einer IP-Verbindung ist die Maximalkapazität eines CDMA-Kanals. Dieser Defaultwert kann bei hoher Netzbelastung vom Ressourcenmanager in der OA&M-Einrichtung 28 herabgesetzt werden.
- Bei Inaktivität einer IP-Verbindung und nach Ablauf eines ersten Timers wird die dieser Verbindung zugewiesene Kapazität auf einen Minimalwert reduziert. Besteht zu diesem Zeitpunkt gleichzeitig eine POTS-Verbindung, so bleibt nur diese bestehen und eine erneute Aktivierung der IP-Verbindung erfolgt wie im Falle des zweiten Scenarios oben beschrieben.
- Bei weiterer Inaktivität einer IP-Verbindung und nach Ablauf eines zweiten Timers wird die dieser Verbindung zugewiesene Kapazität auf Null reduziert, die IP Control 74 und 81 bleiben bestehen.

Die Behandlung der Daten der verschiedenen Dienste für die Übertragung über das Airinterface 3 (Figur 1) ist in der Tabelle 1 zusammengefaßt. Die Spalten beinhalten die Aufbereitung der Daten des jeweiligen Dienstes von der Protokollschicht über die Layer 2 Sicherungsschicht und den Physical Layer bis zum sendefähigen Signal. Bei Einsetzung der jeweiligen inversen Prozesse stellt die Aufwärtsrichtung in den Spalten die Rekonstruktion der Daten des jeweiligen Dienstes vom Empfangssignal über den Physical Layer, die Layer 2 Sicherungsschicht und die Protokollschicht dar.

Spalte 1 beinhaltet die Behandlung der Daten im Physical Signalling Plane 25. Die Instanzen des Airinterface Protokoll sind die Layer 3 der Protokollstacks 65 und 69 (Figur 2). der Protokollstacks 65 und 69 und beinhalten eine Sicherung mittels CRC 4. Das Airinterface Protokoll selbst ist, da nicht erfindungsrelevant, hier nicht dargestellt.

Spalte 2 beinhaltet die Behandlung der Daten des Layer 1 Control. Die Funktionalität und die Einbindung der Daten in die Übertragung werden unten beschrieben.

Spalte 3 beinhaltet die Behandlung der Daten im IP Plane 71 (Figur 3). Wie bereits beschrieben, wird keine Behandlung des IP-Protokolls durchgeführt. Die Instanzen des SAR sind die SAR-Einrichtungen 78 und 85. Die Instanzen der Datensicherung sind die Layer 2 40 und 48, auf welche über je einen speziellen Service Access Point zugegriffen wird.

Tabelle 1

| Dienste | 1 | 2 | 3 | 4 | 5 | 6 | | |
|---|---|---|---|---|---|---|---|---|
| | Physical Signalling | Layer 1 Control | Paketdaten | OA&M-daten | POTS Signalling | POTS Nutzdaten | | |
| | | | | | | Voice | Fax | Modem |

(fortgesetzt)

| | | 1 | 2 | 3 | 4 | 5 | 6 | | |
|---|---|---|---|---|---|---|---|---|---|
| Protokoll | | Air-interface Protokoll | internes L1 Control Protokoll | | internes OA&M-Protokoll | internes POTS-Protokoll | | | |
| Datensicherung | | | | SAR | SAR | | | | |
| | | | | Layer 2 | | | | | |
| | | CRC 4 | CRC 4 | CRC 8 | | | | | |
| Physical Layer | | | | SLIP | | | G.729 | T.38 | G.711 |
| | | Mapping | | | | | | | |
| | | Fehlercodierung (FEC, Convolutional Coder) | | | | | | | |
| | | Interleaving | | | | | | | |
| | | Spreading (CDMA) | | | | | | | |
| | | Modulation | | | | | | | |

Spalte 4 beinhaltet die Behandlung der Daten des Management Plane 24 (Figur 2). Die Instanzen des internen OA&M-Protokoll und des SAR sind Bestandteile der OA&M-Einrichtungen 28 und 32 und, da nicht erfindungsrelevant, hier nicht dargestellt. Die Instanzen der Datensicherung sind die Layer 2 40 und 48, auf welche über je einen speziellen Service Access Point zugegriffen wird.

Spalte 5 beinhaltet die Behandlung der Daten des POTS Signalling Plane 25 (Figur 2). Die Instanzen des internen POTS-Protokoll sind die Layer 3 39 und 47. Die Instanzen der Datensicherung sind die Layer 2 40 und 48, auf welche über je einen speziellen Service Access Point zugegriffen wird.

Der gemeinsame Layer 2 der Daten entsprechend der Spalten 3, 4 und 5 ist ein wesentliches erfindungsgemäßes Merkmal. Die über die Service Access Points zugeführten Datenpakete werden als PDU mit einem L2-Header versehen. In der nächsten Teilschicht erfolgt eine Sicherung mit einem CRC 8. Für die folgende serielle Übertragung dieser Daten erfolgt in der nächsten Teilschicht eine Behandlung mittels SLIP (Serial Line Internet Protocol). Das Layer 2 Protokoll ist entsprechend Stand der Technik ausgeführt und wird deshalb nicht im Detail beschrieben. Angewandt wird das als "Sliding Window" bekannte Verfahren, welches geeignet ist, eine unterbrechungsfreie Übertragung ohne Wartezeiten für Quittungen zu realisieren. Spalte 4 beinhaltet die Behandlung der POTS Nutzdaten des User Plane 27 (Figur 2). Es erfolgt keine Behandlung in einer Protokoll und Sicherungsschicht. Die Instanzen der obersten Schicht des Physical Layers in den drei Teilspalten korrellieren jeweils mit den alternativ zu benutzenden Stacks 54 und 60 beziehungsweise 55 und 61 beziehungsweise 56 und 62.

Ab dem vorstehend beschriebenen Stand werden die Daten aller Dienste entsprechend den Spalten 1 bis 6 gemeinsam in den nachfolgenden Teilschichten des Layer 1 weiter behandelt. Dies beinhaltet das Mapping in die Kanäle, welches sich aus der unten beschriebenen Kanalstruktur ergibt. Fehlercodierung mittels eines FEC, Interleaving, CDMA und Modulation sind entsprechend Stand der Technik ausgeführt und werden deshalb nicht im Detail beschrieben.

Figur 4 beschreibt das Kanalschema einer konkreten Ausführung der Erfindung bei Nutzung von CDMA in Verbindung mit TDM/TDMA und TDD. Die Codekanäle 90.0 bis 90.n besitzen eine einheitliche Kanalstruktur. Grundstruktur ist ein Frame 91, unterteilt in die Downlinkperiode 92, die Uplinkperiode 93 und einen Slot für Laufzeitausgleich und Startup-Synchronisation 94. Zur besseren Übersicht ist die Zeitachse 96 mit dargestellt. Die Downlinkperiode 92 beinhaltet die Aussendungen der Basisstation 1 (Fig. 1) und die Uplinkperiode 93 die Aussendungen der Teilnehmerstationen 4. Zur Realisierung des TDM/TDMA ist der Frame in 15 Slots 95.0 - 95.14 (Fig. 4) gleicher Dauer unterteilt. Die Slots 95.0 - 95.6 sind der Downlinkperiode 92 und die Slots 95.8 - 95.14 der Uplinkperiode 93 zugeordnet. In dieser Kanalstruktur ist der Slot 95.7 mit dem Slot für Laufzeitausgleich und Startup-Synchronisation 94 identisch. Für die Nutzung im Duplexverfahren sind die Slots 95.i paarweise nach dem Schema (i,i+8) mit i=0..6 einander als Nutzkanäle zugeordnet.

Figur 5 beschreibt die Struktur eines Multiframe_6 (MF_6) für einen Codekanal, basierend auf einem Kanalschema entsprechend Figur 4, die sich aus dem nachfolgenden Nutzungsschema für die Slots 95.0 - 95.6 und die Slots 95.8 - 95.14 ergibt. Dargestellt ist eine Folge von sechs Frames 101.0 - 101.5, die gemeinsam einen MF_6 100 bilden. Die Bezeichnungsweise/Zählweise für die Frames eines MF_6 Nr. i ist MF_6(i,0..5), wobei i die Nummer des MF_6 innerhalb eines unten beschriebenen Hyperframes ist.

Die Figur 5 stellt die identischen Ordnungsschemata für die Slots 95.0 bis 95.6 und Slots 95.8 bis 95.14 dar, beispielhaft erläutert an den Slots 95.0 bis 95.6:

- Die Slots 95.0 bis 95.5 werden als primäre Slots für die Nutzdatenübertragung verwendet und sind die kleinste einer Verbindung zuordenbare Einheit. Mehrkanalzuweisungen zur Erhöhung der Übertragungskapazität einer Verbindung sind möglich.
- Der Slot 95.6 wird modulo 6 umlaufend den primären Slots 95.0 bis 95.5 zugeordnet, womit sich ein MF_6 100 ergibt, der 6 Frames umfaßt.

Damit sind im Frame MF_6(i,j) wie dargestellt jeweils der Slot 95.j und der Slot 95.6 einander zugeordnet. Das Ordnungsschema der Slots 95.8 bis 95.14 ist adäquat und mit gleicher Zählrichtung.

Die Nutzung dieser Ordnungsschemata erfolgt derart, daß, beispielhaft erläutert an den Slot 95.0 bis 95.6,

- bei Verbindungen, die eine gesonderte Signalisierung verwenden und welchen nur ein Slot für die Übertragung von Nutzdaten zugewiesen ist, der Slot 95.6 ausschließlich für die Signalisierung benutzt wird,
- bei Verbindungen, die eine gesonderte Signalisierung verwenden und welchen mehrere Slots für die Übertragung von Nutzdaten zugewiesen sind, mindestens ein Slot 95.6 für die Signalisierung Verwendung findet, weitere der Slot 95.6 in Abhängigkeit von Festlegungen zum Verbindungstyp jedoch auch für die Nutzdatenübertragung Verwendung finden. So werden in einer konkreten Ausführung der Erfindung einem bestimmten Verbindungstyp alle Slots 95.0 bis 95.5 eines Codekanals zugewiesen, womit diese Verbindungen auch über alle Slots 95.6 eines MF_6 verfügen. Festlegungsgemäß wird von diesen Verbindungen nur der Slot 95.6 des ersten Frames 101.0 im MF_6 100 für die Signalisierung genutzt und die Slot 95.6 aller weiteren Frames im MF_6 werden für die Übertragung von Nutzdaten verwendet.
- bei Verbindungen, die keine gesonderte Signalisierung verwenden, wie zum Beispiel bei TCP/IP-Verbindungen, das Nutzungsschema beibehalten, der Slot 95.6 aber generell für die Übertragung von Nutzdaten verwendet wird.

Die Slots 95.8 bis 95.14 werden in gleicher Weise genutzt.

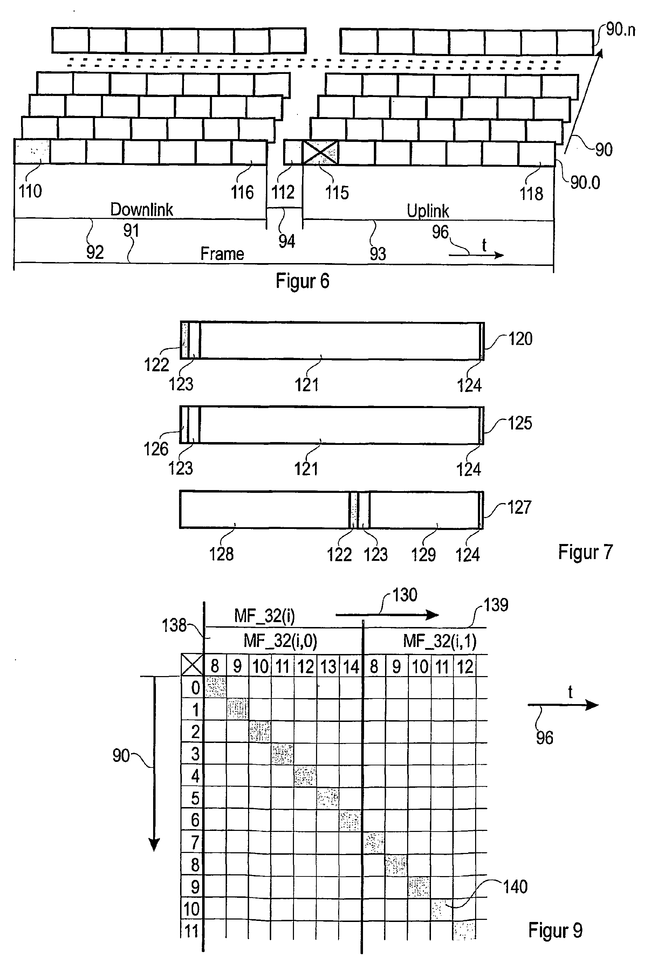

Figur 6 beschreibt die Einordnung der speziellen Kanäle für Synchronisation und Steuerung sowie der Schutzzeit für den Laufzeitausgleich in das TDD und das Kanalschema entsprechend Figur 4. Dargestellt wird der Pool der Codekanäle 90 für die Dauer eines Frame 91. Zur besseren Übersicht ist die Zeitachse 96 mit dargestellt. Im Codekanal 90.0 sind im Slot 95.0 ein BCH 110 (Broadcast Channel) und im Slot 95.7 ein RACH 112 (Random Access Channel) angeordnet. Der achte Slot 115 wird im Codekanal 90.0 bestimmungsgemäß nicht benutzt.

Dargestellt ist des weiteren, daß der Slot für Laufzeitausgleich und Startupsynchronisation 94 nur im Codekanal 90.0 mit Aussendungen durch den RACH 112 belegt ist, welcher gegenüber der Slotdauer so verkürzt ist, daß die entstehende Lücke noch hinreichend groß für den Laufzeitausgleich ist. In allen weiteren Codekanälen 90.1 bis 90.n wird der Slot für Laufzeitausgleich und Startupsynchronisation 94 bestimmungsgemäß nicht mit Aussendungen belegt.

Das erfindungsgemäße Verfahren führt Verbindungsaufbau und Startupsynchronisation mit Nutzung der BCH 110 und RACH 112 bei Teilnehmerstationen durch, die zum Zeitpunkt keine anderweitige aktive Verbindung besitzen (siehe hierzu auch die Beschreibungen zu Figur 2 und Figur 3). Die Verfahrensschritte sind:

- die Basisstation 1 (Fig. 1) sendet eine Verbindungsanforderung für kommenden Verkehr mit Angabe der Adresse (ID) der gerufenen Teilnehmerstation 4 und des Diensttyps im BCH 110 (Fig. 6). Die adressierte Teilnehmerstation 4 antwortet im RACH 112 des gleichen Frame 91 mit Angabe ihrer Teilnehmerstations-ID. Ein Hazard mit Aussendungen anderer Teilnehmerstationen 4 kann nicht auftreten, da für diese die an eine bestimmte Teilnehmerstation gerichtete Sendung der Basisstation 1 im BCH 110 eine Sperre von Aussendungen bewirkt.
- oder eine Teilnehmerstation sendet eine Verbindungsanforderung für gehenden Verkehr mit Angabe der Adresse (ID) der rufenden Teilnehmerstation 4 und des Diensttyps im RACH 112. Ein Hazard mit Aussendungen anderer Teilnehmerstationen 4 kann auftreten und führt dann in der Regel zum Abbruch des Verfahrens infolge gegenseitiger Störung des Empfangs in der Basisstation 1. Die Entflechtung der Hazardbeteiligten erfolgt derart, daß jede dieser Teilnehmerstationen 4 eine Zufallszahl im Bereich zwischen 0 und 15 generiert und eine dieser Zahl entsprechende Anzahl von Frames bis zu einer Wiederholung der Anforderung verstreichen läßt. Der Random Access durch Teilnehmerstationen ist zulässig, wenn die Aussendung der Basisstation 1 im BCH 110 des gleichen Frames nicht an eine andere Teilnehmerstation adressiert war oder keine Vollastinformation oder keine allgemeine Anrufsperre enthielt.

Der besagte Random Access der Teilnehmerstationen 4 im RACH 112 erfolgt zum frühestmöglichen Zeitpunkt nach Empfang der Downlinkperiode 92. Auf Grund der unterschiedlichen Entfernungen zwischen Basisstation 1 und den Teilnehmerstationen 4 ist die Lage des RACH 112 im Slot für Laufzeitausgleich und Startupsynchronisation 94 beim Empfang in der Basisstation 1 nicht fixiert. In Figur 6 ist die Lage für eine Teilnehmerstation 4 in der maximal zulässigen Entfernung dargestellt. Die Basisstation 1 kann aus der Messung der Lage des RACH 112 unmittelbar auf die Entfernung der sendenden Teilnehmerstation 4 schließen und berechnen, um wieviel die Aussendung dieser Basisstation verzögert werden muß, damit die Lage des RACH 112 in die Position verschoben wird, die der Darstellung in Figur 6 und damit der Synchronisation der Teilnehmerstation 4 insgesamt entspricht.

Die weiteren Verfahrensschritte sind unabhängig von der Richtung der Anforderung wie folgt:

- die Basisstation 1 mißt die Lage des RACH 112 im Slot für Laufzeitausgleich und Startupsynchronisation 94. Bei nicht hinreichend sicherer Messung infolge ungenügendem Signal/Störabstand kann die Basisstation 1 in nachfolgenden Frames 91 eine oder bis zu drei Wiederholungen der Prozedur im BCH 110 / RACH 112 anweisen und vornehmen.
- die Basisstation 1 (Fig. 1) sendet in einem nachfolgenden Frame 91 im BCH 110 an die Teilnehmerstation 4 die Kanalzuweisung und die Weisung über die Zeitverzögerung der Aussendungen, die aus der Lage des RACH 112 im Slot für Laufzeitausgleich und Startupsynchronisation 94 bestimmt wurde.
- die Teilnehmerstation 4 wechselt in den zugewiesenen Kanal und sendet mit der angewiesenen Verzögerung.

Der Slot 116 (Fig. 6) ist vom Typ 95.6 (Fig. 5) und über den MF_6 100 mit den BCH 110 in der dort beschriebenen Weise verknüpft und ist in das Verfahren der Startupsynchronisation und weiterer Startupprozeduren wie oben geschildert nicht einbezogen. Gleiches gilt adäquat für den Slot 118. Es werden wahlweise zwei Nutzungen vorgenommen:

- eine erste Nutzung besteht in der Verwendung des Slots 116 für unidirektionale Broadcastsendungen der Basisstation 1.
- eine zweite Nutzung besteht in der Verwendung des Slotpaares 116/118 für OA&M- oder Servicezwecke, die nur eine geringe Übertragungsrate erfordern, da diese Slots in jedem MF_6 100 (Fig. 5) nur einmal, jeweils im Frame MF_6(i,0), zur Verfügung stehen.

Figur 7 stellt den allgemeinen Aufbau verschiedener Slottypen dar. Der Slottyp 120 wird im Downlink 92 (Figur 4) und in ausgewählten Slots des Uplink entsprechend der Vorschriften des Multiframe 32 (siehe Beschreibung unten) verwendet und umfaßt Präambelsymbole 122, Referenzsymbole 123, eine Packed Data Unit 121 (PDU) und eine Schutzzeit 124. Die Schutzzeit 124 (des jeweils vorangehenden Slots) und die Präambelsymbole 122 werden für die Messung der Kanalimpulsantwort benutzt. Die Referenzsymbole sind optional und dienen der Bestimmung der Parameter für die kohärente Demodulation der Daten. Die Präambelsymbole 122 sind für die gesamte Einrichtung einheitlich und werden mit einer einheitlichen Sequenz gesendet. Diese Sequenz ist nicht aus dem Vorrat der Codesequenzen des CDMA des Nutzdatenbereiches ausgewählt. Es folgt, daß die Präambelsendungen im Downlink 92 (Figur 4) infolge der additiven Überlagerung der CDMA-Kanäle in der Basisstation 1 bei den empfangenden Teilnehmerstationen 4 mit einer hohen Symbolenergie eintreffen. Dies führt zur Verbesserung der Erkennung und Synchronisation auf die eintreffenden Sendungen in den Teilnehmerstationen 4.

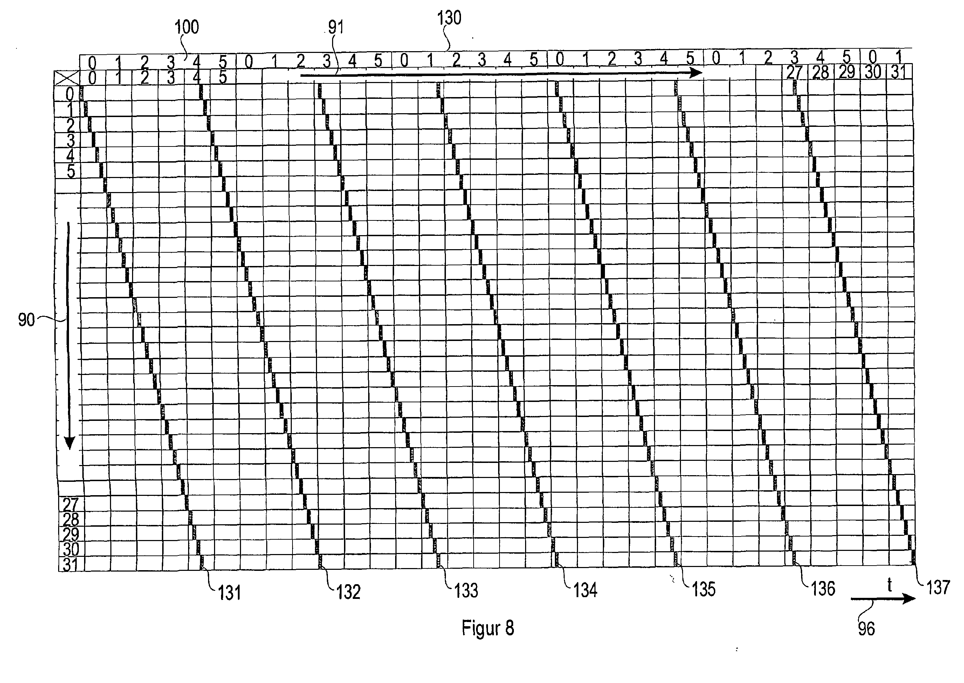

Der Slottyp 125 wird im Uplink 93 verwendet, ausgenommen die durch den MF_32 130 (Figur 8) speziell vorgegebenen Fälle entsprechend der untenstehenden Beschreibung. Der Unterschied zum Slottyp 120 ist, daß an Stelle der Präambelsymbole 122 eine Schutzzeit 126 tritt.

Der Slottyp 127 wird nur als Slot 95.7 im Codekanal 90.0 verwendet und umfaßt die Schutzzeit für Laufzeitausgleich 128 und den RACH 112 (Figur 4) mit Präambelsymbolen 122, Referenzsymbole 123, der verkürzten Packed Data Unit 129 und einer Schutzzeit 124.

Figur 8 beschreibt die Struktur und Funktion eines Multiframe_32 (MF_32) 130 für eine Ausführung der Erfindung mit 32 Codekanälen 90. Figur 9 stellt der besseren Erläuterung wegen einen Ausschnitt aus Figur 8 dar. Ein MF_32 umfaßt 32 Frames 91 (Figur 4). Das kleinste gemeinsame Vielfache von MF_32 und MF_6 ist 96 und wird als ein Hyperframe verwendet, der zur eindeutigen Adressierung aller Elemente in der Framestruktur Verwendung findet, so daß sich bei Verwendung eines gemeinsamen Framezählers z = 0..95 eine Numerierung des MF_32 (0..2) und eine Numerierung der MF_6 (0..15) ergibt. Der einzelne Slot im MF_32 hat mit diesen Festlegungen die Bezeichnung MF_32(i,j,k), wobei i die Nummer des MF_32 (0..2), j die Nummer des Frame 91 im MF_32 mit j = z mod 32 und k die Nummer des Slot 95.k, k = 8..14 bedeuten.

Die Funktion eines MF_32 130 ist, eine solche Vorschrift zu schaffen, daß jedem Slot 95.k jedes Codekanals 90 im Uplink 93 (Figur 4) ein Zeitpunkt zugeordnet ist, zu welchem am Anfang dieses Slots und ausschließlich dieses Codekanals von einer Teilnehmerstation 4 die Aussendung von Präambelsymbolen 122 erfolgt. Die Aussendung der Präambeln erfolgt jeweils durch die Teilnehmerstation, welcher der besagte Slot auch für die Nutzung zugewiesen ist.

In Figur 8 ist über den Bereich eines gesamten MF_32 dargestellt, wie im Uplink 93 (Fig. 4) diese Berechtigung zyklisch über alle Codekanäle 90 und Slots 95.8 bis 95.14 derart verteilt wird, daß in jedem Codekanal 90 jeder der Slots 95.8 bis 95.14 mindestens einmal diese Berechtigung erhält. Die Darstellung enthält ausschließlich die Slots 95.8 bis 95.14. So sind dies, erläutert am Codekanal 31, die Slots MF_32(0,4,11) 131, MF_32(0,9.8) 132, MF_32(0,13,12) 133, MF_32(0,18,9) 134, MF_32(0,22,13) 135, MF_32(0,27,10) 136 und MF_32(0,31,14) 137.

Der Zusammenhang zwischen Zählerstand z des Hyperframe, Nummer des Slot k und Nummer des Codekanals c ist durch die Beziehung

$$c = ((z \bmod 32)*7+k-8) \bmod 32$$

gegeben.

In Figur 9 sind die Frames MF_32(i,0) 138 und MF_32(i,1) 139 weiter aufgelöst. Für einen Zählerstand z = 65 und den Slot 11 in diesem Frame ergibt sich nach obiger Beziehung

$$c = ((65 \bmod 32)*7+11-8) \bmod 32 = 10$$

Durch diese Beziehung ist eindeutig der Slot MF_32(i,1,11) 140 für die Aussendung der Präambelsymbole bestimmt.

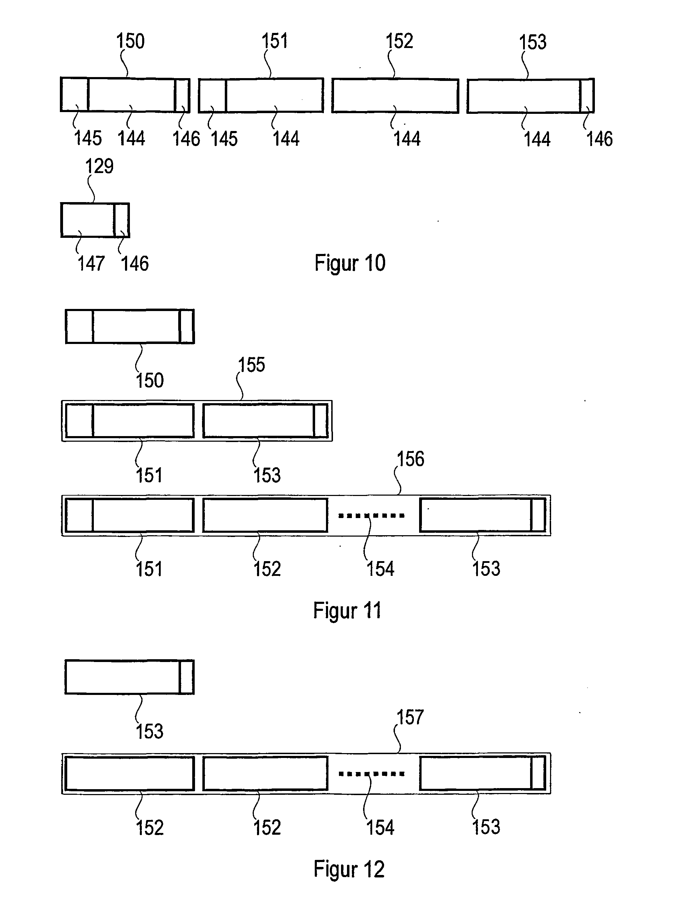

Der Stand des Hyperframezählers wird von der Basisstation 1 entsprechend Möglichkeiten, wenn anderweitig keine Daten zu übertragen sind, als Broadcastsendung im Slot 116 (Figur 4) oder Füllinformation in Signalisierungskanälen übertragen. Damit wird in unregelmäßigen Abständen der Stand des Zählers aktualisiert, in den Zwischenzeiten wird in den Teilnehmerstationen 4 freilaufend weitergezählt. In Figur 10 werden die Strukturen der Packed Data Units 121 und 129 (Figur 7) im Detail beschrieben. Die PDU 121 besitzt vier mögliche Modifikationen als

- PDU 150, umfassend ein Nutzdatenfeld 144, ein L1 Control Feld 145 und einen FEC-Suffix 146,
- PDU 151, umfassend ein Nutzdatenfeld 144 und ein L1 Control Feld 145,
- PDU 152, umfassend ausschließlich ein Nutzdatenfeld 144,
- PDU 153, umfassend ein Nutzdatenfeld 144 und einen FEC-Suffix 146.

Die PDU 150 .. 151 haben eine konstante Länge. Das Nutzdatenfeld 144 ist generell vorhanden und variiert in der Länge in Abhängigkeit vom Vorhandensein oder Abwesenheit der anderen Elemente. Dies sind

- das L1 Controlfeld 145, welches eine konstanter Länge besitzt. In der Downrichtung erfolgt eine Nutzung für die Steuerung der Synchronisation und Sendeleistung der Aussendungen der Teilnehmerstationen 4 durch die Basisstation 1. In der Uprichtung erfolgt eine Nutzung für die Übermittlung von Parametern der Empfangsqualität von der Teilnehmerstationen 4 an die Basisstation 1.
- der FEC-Suffix 146, welcher ebenfalls eine konstanter Länge besitzt. Der FEC-Suffix ist eine dedizierte Bitfolge, die an einen Nutzdatenblock angefügt werden muß, um im Burstbetrieb den Nutzdatenblock an den Ausgängen der FEC Encoder und FEC Decoder wieder komplett verfügbar zu haben. Bei einem FEC mit einer Constraint Length c sind hierfür (c-1) Bit erforderlich.

Die PDU 129 existiert nur in einer Variante, bestehend aus einem Nutzdatenfeld 147, welches gegenüber den Nutzdatenfeldern 144 circa um den Faktor 2 verkürzt ist, und einen FEC-Suffix 146.

Die Figuren 11 und 12 beschreiben die Bildung unterschiedlicher Traffictypen, welche dadurch erfolgt, daß ein oder mehrere zusammenhängende Slots 95 zur Anwendung kommen, welche durch Benutzung einer oder einer Kombination mehrerer verschiedener PDU in besagten Slots derart gebildet werden, daß in jeder der beiden Übertragungsrichtungen identisch in der Übertragung zwischen Basisstation 1 und einer Teilnehmerstation 4 pro Frame 91 jeweils genau ein L1 Controlfeld 145 und pro Traffictyp genau ein FEC-Suffix 146 enthalten sind. Für die Verarbeitung durch die sende- und empfangsseitigen FEC-Einrichtungen wird entsprechend der Beschreibung oben ein Traffictyp als ein zusammenhängender Datenburst, gebildet durch die Summe der aufeinanderfolgenden PDU, betrachtet und gehandhabt, welcher mit einem FEC-Suffix 146 abgeschlossen ist. Diese Festlegung hat dadurch zur Folge, daß bei Traffictypen, die mehrere Slots 95 umfassen, der Nutzdateninhalt überproportional steigt.

Figur 11 stellt die Traffictypen dar, welche für die Übertragung der Nutzdaten von POTS-Verbindungen oder für Verbindungen der Layer 2 Instanzen () im Falle, daß keine POTS-Verbindung simultan besteht.

Ein erster Traffictyp 150 ist mit der PDU 150, umfassend ein Nutzdatenfeld 144, ein L1 Control Feld 145 und einen FEC-Suffix 146, identisch. Der Traffictyp 150 belegt im Kanalschema einen Slot 95 (Figur 4) und findet Verwendung bei POTS-Verbindungen mit komprimierter Sprachübertragung nach G.729 (siehe Beschreibung zu Figur 2) und bei stand alon IP-Verbindungen, welche auf Grund von Inaktivität in einer ersten Stufe auf Minimalkapazität reduziert sind (siehe Beschreibung zu Figur 3).

Ein zweiter Traffictyp 155 umfaßt eine PDU 151 und eine PDU 153 und belegt im Kanalschema zwei aufeinanderfolgende Slot 95 (Figur 4). Der Traffictyp 155 findet Verwendung bei POTS-Verbindungen im Falle von Faxübertragungen nach T.38 (siehe Beschreibung zu Figur 2) und bei stand alon IP-Verbindungen, wenn auf Grund von hoher Belastung des Systems eine größere Kapazitätszuweisung pro Verbinbdung nicht möglich ist (siehe Beschreibung zu Figur 3).

Ein dritter Traffictyp 156 umfaßt eine PDU 151, mindestens eine bis maximal fünf PDU 152 und eine PDU 153. Der Traffictyp 156 belegt im Kanalschema drei bis maximal sieben Slot 95 (Figur 4) und findet Verwendung bei POTS-Verbindung mit Modembetrieb oder stand alon IP-Verbindungen (siehe Beschreibungen zu den Figuren 2 und 3). Ein Traffictyp mit sieben Slots 95 ergibt sich, wenn die Slots 95.0 bis 95.5 einer Verbindung zugewiesen werden und dadurch auch alle Slots 95.6 eines MF_6 100 (Figur 5) entsprechend Festlegungen zum MF_6 dieser Verbindung zugeordnet sind.

Figur 12 stellt die Traffictypen dar, welche für Verbindungen der Layer 2 Instanzen 40 und 48 genutzt werden im Falle, daß eine POTS-Verbindung simultan besteht.

Ein erster Traffictyp 153 ist mit der PDU 153, umfassend ein Nutzdatenfeld 144 und einen FEC-Suffix 146, identisch. Ein zweiter Traffictyp 157 mindestens eine bis maximal fünf PDU 152 und eine PDU 153. Der Traffictyp 157 belegt im Kanalschema zwei bis maximal sechs Slot 95 (Figur 4).

Die Einbindung in die Arbeitsweise des Systems erfolgt derart, daß in der Downrichtung 92 die zu übertragenden Daten in der Basisstation 1

- von den L2 Instanzen 40, umfassend die IP- und OA&M-Daten und POTS-Signalisierungsdaten,
- von den Data Control 51, umfassend die Nutzdaten der POTS-Verbindungen über den jeweils aktiven Stack 54, 55, 56,
- von den CDMA-Empfangsbaugruppen, umfassend die L1 Controldaten 145,

  an eine Mappingeinrichtung (siehe Tabelle 1) übergeben werden, wobei die besagten Daten nicht mit den Längen der PDU und Traffictypen korrelieren müssen. Von der Mappingeinrichtung werden die übergebenen Daten
- in die Traffictypen und deren PDU eingeordnet
- und PDU-weise an die nachfolgende Interleavingeinrichtung zur weiteren Bearbeitung und Übertragung übergeben.

Durch reverse Prozesse in der Teilnehmerstation 4 wird die erfolgte Bearbeitung der Daten rückgängig gemacht und

- IP- und OA&M-Daten und POTS-Signalisierungsdaten an die L2 Instanz 48,
- Nutzdaten der POTS-Verbindung über den jeweils aktiven Stack 60, 61, 62 an das Data Control 58,
- und L1 Controldaten an die CDMA-Sendebaugruppe

übergeben. Das Verfahren in der Uprichtung 93 erfolgt identisch.

In den beiden Übertragungsrichtungen werden identisch die Daten

- der L2 Instanzen 40 und 48, umfassend die IP- und OA&M-Daten und POTS-Signalisierungsdaten
- und der Data Control 51 und 58, umfassend die Nutzdaten der POTS-Verbindungen über den jeweils aktiven Stack, in jeweils getrennten Traffictypen übertragen,
- die sich in die der jeweiligen Teilnehmerstation zugewiesenen Slots teilen, wofür die oben beschriebenen Zuweisungs- und Prioritätskriterien (siehe Beschreibung zu Figuren 2 und 3) Anwendung finden
- welchen FEC mit unterschiedlichen FEC-Raten zugewiesen werden können, vorteilhaft insbesondere dann, wenn für die Übertragung von Daten ein FEC mit einem höherem Fehlerschutz zur Anwendung kommen soll als bei der Übertragung von Sprache erforderlich,
- und bei welchen bei Bestehen einer POTS-Verbindung die L1 Controldaten gemeinsam mit den Daten der Data Control 51 und 58 im gleichen Traffictyp übertragen werden.

Die Steuerung erfolgt, indem die zu übertragenden Daten von den L2 Instanzen 40 und 48 und den Data Control 51 und 58 mit einem Mapping Header an die Mapping Einrichtungen übergeben werden, umfassend die Informationen

- Kennung der Absenderinstanz (Call Reference),
- Kennung der Teilnehmerstation (ID),
- Dienstkennung (POTS, Layer 2),
- Codekanal (0 .. n), n = Anzahl der Codekanäle,
- Slotanzahl (1 .. j), j = maximale Anzahl der Slot

- Offset (0 .. (j-1)), Nummer des ersten zu verwendenden Slots
- FEC-Rate, (zum Beispiel 1/2, 3/4 oder andere),
- L1 Control (j/n),

und welcher Mapping Header ausschließlich der Steuerung des Mapping dient und nicht übertragen wird, und die Mapping Einrichtungen die Informationen der Mapping Header auch benutzen für die Behandlung der Daten der jeweiligen Empfangsrichtung, deren Remapping und Übertragung an die L2 Instanzen 40 und 48 und Data Control 51 und 58.

[1] Vicente Quilez, Head of RCD Fixed Radio Systems Department, Alcatel, Telecom 99 Inter@ctive "Effiient provision of Internet in wireless access systems"

Bezugszeichenliste

| | |
|---|---|
| 1 | Basisstation |
| 2 | Antenne der Basisstation |
| 3 | Airinterface |
| 4 | Teilnehmerstation |
| 5 | Antenne der Teilnehmerstation |
| 6 | PSTN-Teilnehmerinterface der Teilnehmerstation |
| 7 | Endgerät des Teilnehmers |
| 8 | Ethernetschnittstelle der Teilnehmerstation |
| 9 | Rechner oder Rechnernetz des Teilnehmers |
| 10 | PCM-Schnittstelle der Basisstation |
| 11 | Optionale Anschaltbaugruppen |
| 12 | Ortsvermittlungszentrale |
| 13 | PSTN (Publik Switched Telephone Network) |
| 14 | Ethernetschnittstelle der Basisstation |
| 15 | Router |
| 16 | Datenleitung |
| 17 | ISP (Internet Service Provider) |
| 18 | Internet |
| 19 | OA&M-Center |
| 20 | Router/Proxyserver |
| 21 | Lokale OA&M-Einrichtung |
| 22 | Für die POTS- und Internet-Access-Networks relevante Elemente der Basisstation 1 (Figur 1) |
| 23 | Für die POTS- und Internet-Access-Networks relevante Elemente der Teilnehmerstation 4 (Figur 1) |
| 24 | Management Plane |
| 25 | Physical Signalling Plane |
| 26 | POTS Signalling Plane |
| 27 | User Plane |
| 28 | OA&M Einrichtungen der Basisstation 1 |
| 29 | Verbindungen zwischen POTS Control 36 und OA&M Einrichtungen 28 |
| 30 | Verbindungen zwischen Service Access Point des Layer 2 40 und der OA&M Einrichtung 28 |
| 31 | Verbindung zwischen OA&M Einrichtung 28 und Airinterface Control 64 |
| 32 | OA&M Einrichtungen der Teilnehmerstationen 4 |
| 33 | Verbindung zwischen POTS Control 44 und OA&M Einrichtung 32 |
| 34 | Verbindung zwischen Service Access Point des Layer 2 48 und der OA&M Einrichtung 32 |
| 35 | Verbindung zwischen OA&M Einrichtung 32 und Airinterface Control 69 |
| 36 | POTS Control in der Basisstation 1 |
| 37 | Protokollstack ortsvermittlungsseitig |
| 38 | Interface für Signalisierung zur Ortsvermittlungsstelle 12 |
| 39 | Layer 3 airinterfaceseitig in der Basisstation 1 |
| 40 | Layer 2 Schichten der aktiven Verbindungen in der Basisstation 1 |
| 41 | Service Access Point des Layer 2 40 für IP-Daten |
| 42 | Signalisierungsverbindung im Airinterface 3 |
| 43 | Verbindung zwischen POTS Control 36 und User Control 51 in der Basisstation 1 |

| | |
|---|---|
| 44 | POTS Control in der Teilnehmerstation 4 |
| 45 | Protokollstack mit Wandlern und Generatoren für die Signalisierung zum analogen Endgerät |
| 47 | Layer 3 airinterfaceseitig in der Teilnehmerstation 4 |
| 48 | Layer 2 bei aktiver Verbindung in der Teilnehmerstation 4 |
| 49 | Service Access Point des Layer 2 48 für IP-Daten |
| 50 | Verbindung zwischen POTS Control 44 und User Control 58 in der Teilnehmerstation 1 |
| 51 | User Control in der Basisstation 1 |
| 52 | Stack mit Datenübertragung nach G.711 |
| 53 | Interface für B-Kanal Daten zur Ortsvermittlungsstelle 12 |
| 54 | Stack mit Sprachkomprimierung nach G.729 |
| 55 | Stack mit Datenumsetzung nach T.38 für Faxübertragung |
| 56 | Stack mit Datenübertragung nach G.711 |
| 57 | Verbindung für Userdaten im Airinterface 3 |
| 58 | User Control in der Teilnehmerstation 4 |
| 59 | Stack mit A/D- und D/A-Wandlern für Signalübertragung zum analogen Endgerät |
| 60 | Stack mit Sprachkomprimierung nach G.729 |
| 61 | Stack mit Datenumsetzung nach T.38 für Faxübertragung |
| 62 | Stack mit Datenübertragung nach G.711 |
| 63 | (Virtuelle) Betätigung für Schließen und Öffnen der Verbindungen 42 und 57 im Airinterface 3 |
| 64 | Airinterface Control in der Basisstation 1 |
| 65 | Protokollstack des Airinterfaceprotokolls in der Basisstation 1 |
| 66 | Organisationskanalverbindung im Airinterface 3 |
| 67 | Verbindung zwischen Airinterface Control 64 und POTS Control 36 |
| 68 | Airinterface Control in der Teilnehmerstation 4 |
| 69 | Protokollstack des Airinterfaceprotokolls in der Teilnehmerstation 4 |
| 70 | Verbindung zwischen Airinterface Control 68 und POTS Control 44 |
| 71 | IP Plane |
| 72 | Verbindungen zwischen OA&M Einrichtung 28 und den IP Control 74 in der Basisstation 1 |
| 73 | Verbindung zwischen OA&M Einrichtung 32 und IP Control 81 in der Teilnehmerstation 4 |
| 74 | IP Control in der Basisstation 1 |
| 75 | IP Address Monitor |
| 76 | Ethernet Protokollabschluß in der Basisstation 1 |
| 78 | Segmentation and Reassembling in der Basisstation 1 |
| 79 | Service Access Point des Layer 2 40 für POTS-Signalisierung |
| 80 | Verbindung zwischen Airinterface Control 64 und den IP Control 74 in der Basisstation 1 |
| 81 | IP Control in der Teilnehmerstation 4 |
| 82 | Address Translator |
| 83 | Ethernet Protokollabschluß in der Teilnehmerstation 4 |
| 85 | Segmentation and Reassembling in der Teilnehmerstation 4 |
| 86 | Service Access Point des Layer 2 48 für POTS-Signalisierung |
| 87 | Verbindung zwischen Airinterface Control 68 und IP Control 81 in der Teilnehmerstation 4 |
| 90 | Codekanäle 0..n des CDMA-Verfahrens |
| 90.i | Codekanal Nr. i des CDMA-Verfahrens |
| 91 | Duplexframe |
| 92 | Downlinkperiode im Duplexframe |
| 93 | Uplinkperiode im Duplexframe |
| 94 | Slot für Laufzeitausgleich und Startup-Synchronisation |
| 95 | Slots 0..15 des TDMA-Verfahrens |
| 95.i | Slot Nr. i des TDMA-Verfahrens |
| 96 | Zeitachse |
| 100 | Multiframe_6 |
| 101 | Frames eines MF_6 |
| 101.i | Frame i eines MF_6 |
| 110 | BCH_1, Broadcast Channel |
| 112 | RACH, Random Access Channel |
| 115 | bestimmungsgemäß ungenutzter Slot |
| 116 | dem BCH 112 im MF_6 zugeordneter Downlink-Signalisierungsslot |
| 118 | dem Slot 115 im MF_6 zugeordneter Uplink-Signalisierungsslot |

120 Slottyp mit Präambelsymbolen
121 Packed Data Unit PDU
122 Präambelsymbole
123 Referenzsymbole
124 Schutzzeit für Slottrennung
125 Slottyp ohne Präambelsymbole
126 Schutzzeit an Stelle von Präambelsymbolen
127 Slottyp im Slot 95.7
128 Schutzzeit für Laufzeitausgleich
129 Verkürzte Packed Data Unit des RACH 112
130 Multiframe_32
131 Slot für Synchronisationsmessung MF_32(0,4,11)
132 Slot für Synchronisationsmessung MF_32(0,9,8)
133 Slot für Synchronisationsmessung MF_32(0,13,12)
134 Slot für Synchronisationsmessung MF_32(0,18,9)
135 Slot für Synchronisationsmessung MF_32(0,22,13)
136 Slot für Synchronisationsmessung MF_32(0,27,10)
137 Slot für Synchronisationsmessung MF_32(0,31,14)
138 Frame MF_32(i,0,8..14)
139 Frame MF_32(i,1,8..14)
140 Slot MF_32(i, 1,11) eines Multiframe_32
144 Nutzdatenfeld
145 L1-Controlfeld
146 FEC-Suffix
147 Nutzdatenfeld der PDU 129 des RACH 112
150 PDU-Typ, Traffictyp
151 PDU-Typ
152 PDU-Typ
153 PDU-Typ, Traffictyp
154 Variable Anzahl zusätzlicher PDU Typ 152
155 Traffictyp mit einer Länge von 2 Slots
156 Traffictyp mit einer Länge von mehr als 2 bis zu 7 Slots, umfassend ein L1 Controlfefd 145
157 Traffictyp mit einer Länge von mehr als 2 bis zu 6 Slots, ohne L1 Controlfeld 145

**Patentansprüche**

1. Verfahren für ein drahtloses Point to Multipoint Kommunikationssystem, umfassend eine Basisstation (1), ein Airinterface (3) und eine Vielzahl von Teilnehmerstationen (4), dessen Teilnehmerstationen sowohl über ein Teilnehmerinterface (6) für den Zugang zum PSTN und ein Ethernetinterface (8) für den Zugang zum Internet verfügen, die unabhängig voneinander und auch simultan nutzbar sind, und das Kommunikationssystem getrennte Zugangsnetzwerke zum PSTN und zum Internet realisiert, wobei die Kapazitätsverteilung zwischen beiden Zugangsnetzen belastungsabhängig angepaßt wird und das Airinterface mit DS CDM/CDMA und einem eingebetteten TDM/TDMA und TDD arbeitet, **gekennzeichnet dadurch, daß**

- im TDM/TDMA-Regime Slots (95) mit unterschiedlichen Typen von Packet Data Units (PDU 150 ..153) zur Anwendung kommen, welche ein Datenfeld (144) und optional ein L1 Controlfeld (145) und/oder optional einen FEC-Suffix (146) umfassen,
- einen oder mehrere zusammenhängende Slots umfassende Traffictypen (150, 155, 156) zur Anwendung kommen, welche durch Benutzung einer oder einer Kombination mehrerer verschiedener PDU in besagten Slots derart gebildet werden, daß in jeder der beiden Übertragungsrichtungen identisch in der Übertragung zwischen Basisstation (1) und einer Teilnehmerstation (4) pro Frame (91) jeweils genau ein L1 Controlfeld (145) und pro Traffictyp genau ein FEC-Suffix (146) enthalten ist,
- für die Verarbeitung durch die sende- und empfangsseitigen FEC-Einrichtungen ein Traffictyp als ein zusammenhängender Datenburst, gebildet durch die Summe der aufeinanderfolgenden PDU, betrachtet und gehandhabt wird, und der Traffictyp mit einem FEC-Suffix (146) abgeschlossen ist, welcher eine dedizierte Bitfolge der Mindestlänge (c-1) Bit bei einer Constraint Length von c Bit des FEC darstellt

**2.** Verfahren nach Anspruch 1, **gekennzeichnet dadurch, daß** die in der Downrichtung (92) zu übertragenden Daten in der Basisstation (1)

- von den L2 Instanzen (40), umfassend die IP- und OA&M-Daten und POTS-Signalisierungsdaten,
- von den Data Control (51), umfassend die Nutzdaten der POTS-Verbindungen über den jeweils aktiven Stack (54, 55, 56),
- von den CDMA-Empfangsbaugruppen, umfassend die L1 Controldaten (145),

an eine Mappingeinrichtung übergeben werden, und besagte Daten nicht mit den Längen der PDU und Traffictypen korrellieren müssen, und von der Mappingeinrichtung die übergebenen Daten

- in die Traffictypen und deren PDU eingeordnet werden
- und PDU-weise an die nachfolgende Interleavingeinrichtung zur weiteren Bearbeitung und Übertragung übergeben werden,

und reverse Prozesse in der Teilnehmerstation (4) die erfolgte Bearbeitung der Daten rückgängig machen und
- IP- und OA&M-Daten und POTS-Signalisierungsdaten an die L2 Instanz (48),
- Nutzdaten der POTS-Verbindung über den jeweils aktiven Stack (60, 61, 62) an das Data Control (58),
- und L1 Controldaten an die CDMA-Sendebaugruppe

übergeben werden, und ein gleiches Verfahren in der Uprichtung (93) Verwendung findet.

**3.** Verfahren nach Anspruch 1, **gekennzeichnet dadurch, daß** in beiden Übertragungsrichtungen identisch die Übertragung von Daten

- der L2 Instanzen (40, 48), umfassend die IP- und OA&M-Daten und POTS-Signalisierungsdaten
- und der Data Control (51, 58), umfassend die Nutzdaten der POTS-Verbindungen über den jeweils aktiven Stack,

in jeweils getrennten Traffictypen erfolgt,
- die sich in die der jeweiligen Teilnehmerstation zugewiesenen Slots teilen,
- welchen FEC mit unterschiedlichen FEC-Raten zugewiesen werden können,
- und bei welchen bei Bestehen einer POTS-Verbindung die L1 Controldaten gemeinsam mit den Daten der Data Control (51, 58) im gleichen Traffictyp übertragen werden.

**4.** Verfahren nach Anspruch 1 und 2, **gekennzeichnet dadurch, daß** die zu übertragenden Daten von den L2 Instanzen (40, 48) und den Data Control (51, 58) mit einem Mapping Header an die Mapping Einrichtungen übergeben werden, umfassend die Informationen

- Kennung der Absenderinstanz,
- Kennung der Teilnehmerstation (ID),
- Dienstkennung (POTS, Layer 2),
- Codekanal (0 .. n), n = Anzahl der Codekanäle,
- Slotanzahl (1 .. j), j = maximale Anzahl der Slot
- Offset (0 .. (j-1)), Nummer des ersten zu verwendenden Slots
- FEC-Rate, (zum Beispiel 1/2, 3/4 oder andere),
- L1 Control (j/n),

und welcher Mapping Header ausschließlich der Steuerung des Mapping dient und nicht übertragen wird, und die Mapping Einrichtungen die Informationen der Mapping Header auch benutzen für die Behandlung der Daten der jeweiligen Empfangsrichtung, deren Remapping und Übertragung an die L2 Instanzen (40, 48) und Data Control (51, 58).

## Claims

**1.** A method for a wireless point-to-multipoint communication system which consists of a base station (1), an air interface (3) and a plurality of subscriber terminal stations (4) wherein these terminal stations have either an subscriber interface (6) for the access to the PSTN and an Ethernet interface (8) for the internet access which may be used independent of each other and simultaneously and the communication system has either an access network to the PSTN and an access network to the internet wherein the load sharing between both access networks will be adapted according to the current traffic requirements and the transmission mode of the air interface is based upon a combined DS CDM/CDMA and TDM/TDMA technology in a TDD scheme; said method comprising the structure and steps of

- using time slots (95) in TDM/TDMA mode with different types of Packet Data Units (PDU 150...153) that have a data field (144) and optionally a L1 control field (145) and/or optionally a FEC suffix,
- using traffic types (150, 155, 156) with one or more consecutive time slots that are realized by using one PDU or a combination of various PDU in said time slots in such a way that identically within each of both directions of transmission between the base station (1) and the subscriber terminal station (4) exact each one L1 control field (145) and per traffic type exact one FEC suffix (146) is used per time frame (91),
- processing a traffic type as a continous data burst by the transmit and receive FEC controller in such a way that consecutive PDU are added and further managed by terminating a traffic type with a FEC suffix that is realized by a dedicated bit sequence of minimum length (c-1) bit with c bit being the constraint length of the FEC algorithm

2. Method according to claim 1 for the downlink direction (92) of the air interface of said base station (1) comprising the steps of transferring data to a mapping device whereas said data must not be identically in terms of PDU lengths and traffic types:

   - from L2 entities (40) comprising IP and OAM data as well as signalization data for POTS,
   - from data control units (51) comprising user data for POTS connections via the current active stack (54, 55, 56),
   - from CDMA receive modules comprising L1 control data (145)
   and performing data operations by the mapping device
   - to integrate the traffic types and referred PDU
   - and to transfer them PDU like to a succeeding interleaving device for further operations and reversing all data processing steps by adequate reverse operations within the subscriber terminal station (4) and transferring data
   - to the L2 entity (48) comprising IP and OAM data as well as signalization data for POTS,
   - to the data control unit (58) comprising user data for POTS connections via the current active stack (60, 61, 62),
   - to the CDMA transmit module comprising L1 control data
   and performing an adequate method for the uplink direction (93).

3. Method according to claim 1 being identically for both directions of transmission comprising the steps of transferring data each within different traffic types:

   - of L2 entities (40, 48) comprising IP and OAM data as well as signalization data for POTS,
   - and of data control units (51, 58) comprising user data for POTS connections via the current active stack, and said traffic types
   - are sharing the time slots assigned to an individual subscriber terminal station,
   - may be assigned FEC algorithms with different coding rates,
   - and, in case of a POTS connection, L1 control data are being transferred together with data of data control units (51, 58) within the same traffic type.

4. Method according to claims 1 and 2 **characterized by** adding a mapping header to data from L2 entities (40, 48) and data control units (51, 58) which consists of

   - an identifier for sender entity
   - an identifier for subscriber terminal station (ID)
   - an identifier for service (POTS, layer 2)
   - a code channel number (0... n), n = number of code channels
   - a number of time slots (1...j), j = maximum number of time slots
   - an offset (0... (j-1)), number of first time slot to be used
   - FEC coding rate (e.g. r = ½, r= ¾ or other)
   - L1 control (y/n)

and transferring data to a mapping device whereas said mapping header is not transferred but is used exclusively for controlling of the mapping device whereas the mapping device is using all data content of the mapping header for data processing in the individual receiving equipment, reverse mapping procedure and transfer to L2 entities (40, 48) and data control units (51, 58).

**Revendications**

1. Procédé pour système de communication sans fil de point à multipoint, comprenant une station de base (1), une interface d'air (3) et une multitude de stations participantes (4) et dont les stations participantes disposent aussi bien d'une interface de participants (6) pour l'accès au RTPC que d'une interface Ethernet (8) pour l'accès à Internet, qui sont utilisables indépendamment l'une de l'autre et aussi simultanément, et dans lequel le système de communication réalise des réseaux d'accès séparés au RTPC et à Internet, la répartition de capacité entre les deux réseaux d'accès étant adaptée en fonction de la charge et l'interface d'air fonctionne avec SD MDC/AMDC et un MRT/AMRT encastré et duplexage temporel, **caractérisé en ce que**

   - dans le régime MRT/AMRT, sont utilisés des intervalles (95) comportant différents types d'unités de paquets de données (packet data units) (PDU 150... 153) qui comprennent un champ de données (144) et en option un champ de contrôle L1 (145) et/ou en option un suffixe FEC (146),
   - sont utilisés des types de trafic (150, 155, 156) comprenant un ou plusieurs intervalles cohérents et qui sont constitués en utilisant une ou une combinaison de plusieurs PDU différentes dans lesdits intervalles de manière à ce que, dans chacun des deux sens de transmission de même que dans la transmission entre la station de base (1) et une station participante (4), par cadre (91), respectivement précisément un champ de contrôle L1 (145) et, par type de trafic, précisément un préfixe FEC (146) soit inclus,
   - pour le traitement par les dispositifs FEC placés au niveau émission et réception, un type de trafic sous forme d'une rafale de données constituée par la somme des PDU successives est considéré et traité et que le type de trafic se termine par un suffixe FEC (146) qui représente une suite de bits dédiée de longueur minimale (c-1) bits avec une longueur de contrainte de c bits du FEC.

2. Procédé selon la revendication 1, **caractérisé en ce que** les données à transférer dans le sens descendant (92) de la station de base (1) sont transmises

   - par les instances L2 (40), comprenant les données PI et OA&M et des données de signalisation POTS,
   - par le contrôle de données (51), comprenant les données utiles des liaisons POTS, via la pile respectivement active (54, 55, 56),
   - par les sous-ensembles récepteurs AMDC, comprenant les données de contrôle L1 (145),
   à un dispositif de mappage et que lesdites données ne doivent pas impérativement être en corrélation avec les longueurs des PDU et des types de trafic et que les données transmises
   - sont classées par le dispositif de mappage en types de trafic et leurs PDU
   - et transmises selon les PDU au dispositif d'entrelacement suivant pour traitement ultérieur et transmission, et que des processus inverses dans la station participante (4) invalident le traitement des données effectué et que
   - les données PI et OA&M et les données de signalisation POTS sont transmises à l'instance L2 (48),
   - les données utiles de la liaison POTS sont transmises via la pile respectivement active (60, 61, 62) au contrôle de données (58)
   - et que les données de contrôle L1 sont transmises au sous-ensemble émetteur AMDC,
   et qu'un même procédé est employé dans le sens montant (93).

3. Procédé selon la revendication 1, **caractérisé en ce que,** d'une manière identique, dans les deux sens de transmission, la transmission de données

   - des instances L2 (40, 48) comprenant les données PI et OA&M et les données de signalisation
   - et du contrôle de données (51, 58) comprenant les données utiles des liaisons POTS a lieu via la pile respective dans des types de trafic respectivement séparés,
   - qui se répartissent dans les intervalles affectés à la station participante respective
   - auxquels des FEC à régimes de FEC différents peuvent être affectés,
   - et pour lesquels, en cas d'existence d'une liaison POTS, les données de contrôle L1 sont transmises en même temps que les données du contrôle de données (51, 58) dans le même type de trafic.

4. Procédé selon les revendications 1 et 2, **caractérisé en ce que** les données à transférer sont transmises par les instances L2 (40, 48) et le contrôle de données (51, 58) avec un en-tête de mappage aux dispositifs de mappage, ces données incluant les informations de

   - identification de l'instance émettrice,
   - identification de la station participante (ID),

- identification du service (POTS, couche 2),
- canal de code (0... n), n = nombre de canaux de code,
- nombre d'intervalles (1... j), j = nombre maximal d'intervalles,
- décalage (0... (j-1)), numéro du premier intervalle à utiliser,
- régime FEC, (par exempte ½, ¾ ou autres),
- contrôle L1 (j/n),

et lequel en-tête de mappage sert exclusivement à commander le mappage et n'est pas transmis, et que les dispositifs de mappage utilisent aussi les informations de l'en-tête de mappage pour le traitement des données du dispositif récepteur respectif, leur remappage et le transfert aux instances L2 (40, 48) et au contrôle de données (51, 58).

Figur 1

Figur 4

Figur 5

Figur 2

Figur 3

Figur 6

Figur 7

Figur 9

Figur 8

Figur 10

Figur 11

Figur 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4240249
- WO 9955030 A
- US 5910946 A
- GB 2321158 A
- JP 10224853 B
- WO 9962268 A
- WO 9961984 A
- EP 0927482 A
- WO 9901969 A
- AU 8181498
- US 5905719 A
- WO 9812833 A
- GB 2313981 A